# EUROPÄISCHE PATENTSCHRIFT

(11) **EP 0 513 629 B1**
(45) Veröffentlichungstag und Bekanntmachung des Hinweises auf die Patenterteilung: **30.11.1994**
(21) Anmeldenummer: 92107555.2
(22) Anmeldetag: 05.05.1992
(51) Int. Cl.: F16D 3/60, F16C 19/55, F16C 33/60, F16D 3/04

(54) **Kupplung zum Kuppeln umlaufender Teile**
Coupling for rotating parts
Accouplement pour parties rotatives

(30) Priorität: 14.05.1991 DE 4115657; 23.08.1991 DE 4128048; 28.11.1991 DE 4139170
(43) Veröffentlichungstag der Anmeldung: 19.11.1992
(73) Patentinhaber: Chivari, Ilie, F-59300 Valenciennes (FR)
(72) Erfinder: Chivari, Ilie, F-59300 Valenciennes (FR)
(74) Vertreter: Wolgast, Rudolf, Dipl.-Chem. Dr.

(56) Entgegenhaltungen:
- EP-A- 0 222 692
- DE-A- 2 639 893
- DE-A- 3 429 043
- DE-A- 3 519 895
- DE-B- 2 431 383
- DE-C- 903 154
- FR-A- 868 043
- GB-A- 2 199 622

## Beschreibung

### Technisches Gebiet

Die Erfindung betrifft eine Kupplung zum Kuppeln umlaufender Teile, die einen Versatz der Umlaufachsen zuläßt, enthaltend
(a) eine antriebseitige Kupplungshälfte, welche mit dem antriebseitigen der zu kuppelnden Teile verbindbar ist,
(b) eine abtriebseitige Kupplungshälfte, welche mit dem abtriebseitigen der zu kuppelnden Teile verbindbar ist,
(c) drei über Lagerungsmittel konzentrisch aufeinander gelagerte Ringe als Kupplungszwischenglieder, wobei
(d) jeder der Ringe über einen ersten Lenker mit der antriebseitigen Kupplungshälfte und über einen zweiten, gegenüber dem ersten um 180° winkelversetzten Lenker mit der abtriebseitigen Kupplungshälfte verbunden ist.

### Zugrundeliegender Stand der Technik

Eine solche Kupplung ist beispielsweise bekannt durch die US-A-4 040 270. Bei der bekannten Kupplung sind die Ringe über zylindrische Gleitlager aufeinander gelagert. Die axiale Führung erfolgt dort über die Lenker.

Durch die DE-A-34 29 043 ist eine Achsversatzkupplung mit drei gleichachsigen, gegeneinander verdrehbaren ringförmigen Kupplungszwischengliedern bekannt, bei denen auf einem ersten Kupplungszwischenglied ein zweites und ein drittes Kupplungszwischenglied nebeneinander auf einem Gleitlager drehbar gelagert sind. Dabei ist das zweite Kupplungszwischenglied von zwei Ringen gebildet, die auf beiden Seiten des dritten Kupplungszwischengliedes sitzen. Die Kupplungszwischenglieder sind über Axiallager aneinander geführt.

Eine ähnliche Anordnung zeigt die DE-A-35 19 895.

### Offenbarung der Erfindung

Der Erfindung liegt die Aufgabe zugrunde, eine Kupplung der eingangs genannten Art einfach und raumsparend aufzubauen.

Der Erfindung liegt die speziellere Aufgabe zugrunde, eine einfach aufgebaute Achsversatzkupplung der eingangs genannten Art zu schaffen, bei welcher die drei, die Kupplungszwischenglieder bildenden Ringe aneinander geführt sind.

Erfindungsgemäß ist vorgesehen, daß
(e) die Ringe in den dem jeweils benachbarten Ring zugewandten Umfangsflächen Ausnehmungen aufweisen, wobei die einander zugewandten Ausnehmungen jeweils miteinander fluchten, und
(f) in den Ausnehmungen als Lagerungsmittel Wälzkörper gehalten sind.

Ausgestaltungen der Erfindung sind Gegenstand der Unteransprüche.

Ausführungsbeispiele der Erfindung sind nachstehend unter Bezugnahme auf die zugehörigen Zeichnungen näher erläutert.

### Kurze Beschreibung der Zeichnungen

- Fig.1: zeigt eine Kupplungshälfte mit den Ringen und den Lenkern bei einer Ausführung der Kupplung.
- Fig.2: zeigt einen Längsschnitt durch die als Kupplungszwischenglieder dienenden Ringe mit den Wälzkörpern.
- Fig.3: zeigt einen Längsschnitt durch die Ringe bei einer anderen Ausführung der Kupplung.
- Fig.4: zeigt abgewandelte Ausführungen der Lagerung mit Rollen.
- Fig.5: ist ein Längsschnitt durch die Ringe bei einer weiteren Ausführung der Kupplung.
- Fig.6: zeigt einen abgebrochen dargestellten Querschnitt durch den äußeren Ring bei der Ausführung von Fig.5.
- Fig.7: zeigt einen Längsschnitt einer Hälfte von drei Kupplungszwischengliedern für eine Kupplung mit nach innen ragenden Armen zur Lagerung von Lenkern, wobei die Lenker jedes Ringes auf einer Seite mit einer antriebseitigen Kupplungshälfte und auf der diametral gegenüberliegenden Seite mit der abtriebseitigen Kupplungshälfte gelenkig verbunden sind.
- Fig.8: ist eine Darstellung ähnlich der von Fig.7 für Kupplungszwischenglieder mit nach außen ragenden Armen.
- Fig.9: zeigt eine weitere Ausführungsform.
- Fig.10: zeigt eine Längsschnitt durch eine Wellenkupplung längs der Linie E-F von Fig. 11.
- Fig.11: zeigt einen Schnitt längs der Linie C-D von Fig. 10.
- Fig.12: zeigt einen Schnitt längs der Linie G-H von Fig. 11.
- Fig.13: zeigt einen Längsschnitt durch eine andere Ausführungsform einer Wellenkupplung

### Bevorzugte Ausführungen der Erfindung

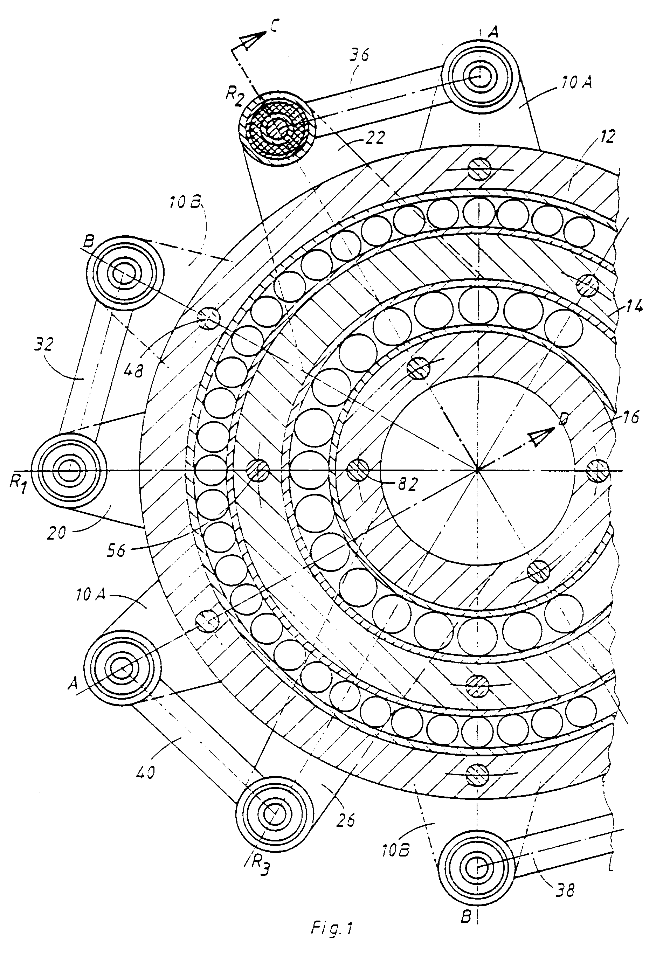

Mit 10A ist eine antriebseitige Kupplungshälfte bezeichnet. Eine entsprechend ausgebildete abtriebseitige Kupplungshälfte 10B ist in Fig.1 nicht sichtbar und nur gestrichelt angedeutet. Die abtriebseitige Kupplungshälfte 10B befindet sich vor der Papierebene in Fig.1. Zwischen der antriebseitigen Kupplungshälfte 10 und der abtriebseitigen Kupplungshälfte sind drei Kupplungszwischenglieder in Form von drei Ringen 12, 14 und 16 angeordnet. Die drei Ringe 12, 14, 16 sitzen ähnlich wie bei der US-A-4 040 270 konzentrisch ineinander. An dem äußeren Ring 12 sitzen diametral gegenüber zwei Paare von radialen Armen, von denen in Fig.1 nur der Arm 20 sichtbar ist. Jedes Paar weist einen Arm an der einen und einen zweiten Arm an der gegenüberliegenden Stirnseite des Ringes 12 auf. An dem mittleren Ring 14 sitzen ebenfalls diametral gegenüber zwei Paare von radialen Armen, von denen in Fig.1 nur der Arm 22 sichtbar ist. Auch hier weist jedes Paar einen Arm an der einen und einen Arm an der gegenüberliegenden Stirnseite des Ringes 14 auf. An dem inneren Ring 16 sitzen diametral gegenüber zwei Paare von radialen Armen, von denen in Fig.1 nur der Arm 26 sichtbar ist. Jedes Paar weist einen Arm an der einen und einen Arm an der gegenüberliegenden Stirnseite des Ringes 16 auf. Die an den Ringen 12, 14 und 16 sitzenden Arme sind in der dargestellten Mittelstellung mit fluchtenden Achsen der Kupplungshälften jeweils um 60° gegeneinander winkelversetzt.

Zwischen den Paaren von radialen Armen sind jeweils Lenker schwenkbar gelagert. Diese Lenker sind mit ihren anderen Enden an Kupplungshälften angelenkt. Die (nicht dargestellten) Arme des äußeren Ringes 12 sind über einen (ebenfalls nicht dargestellten) Lenker mit der antriebseitigen Kupplungshälfte 10A verbunden. Die dazu diametral gegenüberliegenden Arme 20 des äußeren Ringes 12 sind über einen Lenker 32 mit der abtriebseitigen Kupplungshälfte 10B verbunden. In entsprechender Weise sind die Arme 22 des mittleren Ringes 14 über einen Lenker 36 mit der antriebseitigen Kupplungshälfte 10A verbunden. Die dazu diametral gegenüberliegenden (nicht dargestellten) Arme des mittleren Ringes 14 sind über einen Lenker 38 mit der abtriebseitigen Kupplungshälfte 10B verbunden. Die Arme 26 des inneren Ringes 16 sind über einen Lenker 40 mit der antriebseitigen Kupplungshälfte 10 verbunden. Die dazu diametral gegenüberliegenden (nicht dargestellten) Arme des inneren Ringes 16 sind über einen (ebenfalls nicht dargestellten) Lenker mit der abtriebseitigen Kupplungshälfte 10B verbunden. Die Lenker erstrecken sich von den Armen an den Ringen jeweils im Uhrzeigersinn um die Ringe 12, 14, 16. Die Schwenkachsen der Lenker bis 42 an den Armen der Ringe 12, 14, 16 liegen in der dargestellten Mittelstellung der Kupplung auf einem gemeinsamen Zylindermantel. Auf diesem Zylindermantel liegen auch die Schwenkachsen, um welche die Lenker an der antriebseitigen bzw. abtriebseitigen Kupplungshälfte 10A bzw. 10B angelenkt sind. Die Lenker haben alle die gleiche Länge. Das ist der bekannte Aufbau der in der US-A-4 040 270 beschriebenen Kupplung.

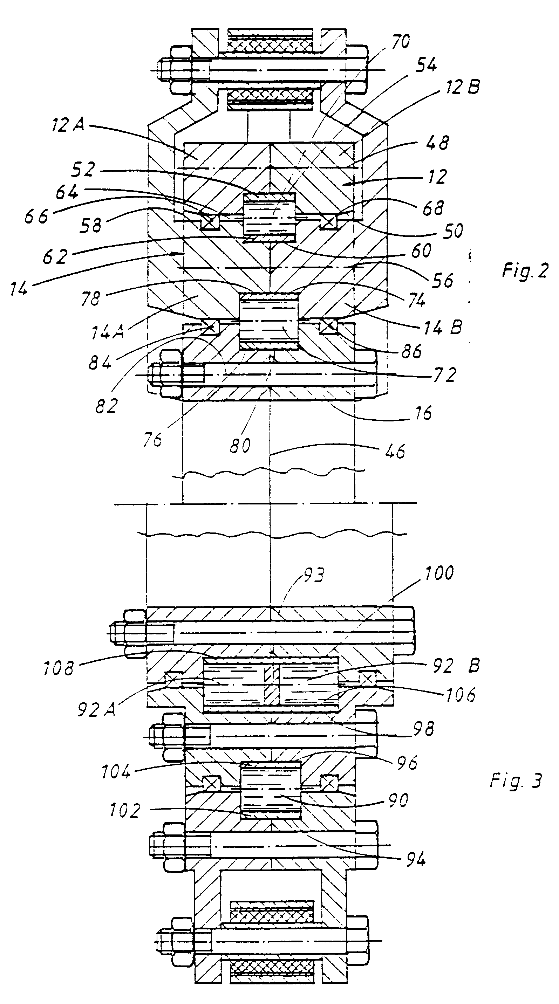

Wie aus Fig.2 ersichtlich ist, ist der äußere Ring 12 längs seiner radialen Symmetrieebene 46 geteilt. Der Ring 12 besteht aus zwei Hälften 12A und 12B. Die Hälften 12A und 12B sind durch Schrauben 48 lösbar miteinander verbunden. Der Ring 12 weist auf seiner dem mittleren Ring 14 zugewandten, inneren Umfangsfläche 50 eine Nut 52 von rechteckigem Querschnitt auf. In der Nut 52 sitzt ein Laufring 54 aus einem harten Metall.

In entsprechender Weise ist der mittlere Ring 14 längs der radialen Symmetrieebene 46 geteilt und besteht aus zwei Hälften 14A und 14 B. Die Hälften 14A und 14B sind durch Schrauben 56 miteinander verbunden. Der Ring 14 weist auf seiner dem äußeren Ring 12 zugewandten äußeren Umfangsfläche 58 eine in Umfangsrichtung verlaufende Nut 60 auf. Die Nut 60 des mittleren Ringes 14 fluchtet mit der Nut 52 des äußeren Ringes 12. Die Nut 60 hat ebenfalls im wesentlichen rechteckigen Querschnitt. In der Nut 60 sitzt ein Laufring 62 aus einem harten Metall.

Zwischen der inneren Umfangsfläche 50 des äußeren Ringes 12 und der äußeren Umfangsfläche 58 des mittleren Ringes 14 ist ein Ringspalt 64 gebildet. Der Ringspalt 64 ist beiderseits der Nuten 52 und 60 zum Außenraum hin durch Dichtringe 66 und 68 abgedichtet. Die Dichtringe 66 und 68 sitzen in Umfangsnuten in der Außenfläche 58 und liegen dichtend an der Innenfläche 50 an.

In dem durch die beiden Nuten 52 und 60 gebildeten Ringraum sitzen Wälzkörper in Form von Rollen 70. Der zwischen den Dichtringen 66 und 68 gebildete Hohlraum einschließlich des Ringraumes ist im übrigen mit Fett gefüllt.

In ähnlicher Weise erfolgt die Lagerung des mittleren Ringes 14 auf dem inneren Ring 16 über Rollen 72. Die Rollen 72 sitzen in einem Ringraum, der durch eine Nut 74 in der inneren Umfangsfläche des mittleren Ringes 14 und eine Nut 76 in der äußeren Umfangsfläche des inneren Ringes 16 gebildet ist. In den Nuten 74 und 76 sitzen Laufringe 78 bzw. 80 aus hartem Metall. Auch der innere Ring 16 ist längs der Symmetrieebene 46 geteilt, wobei die beiden Teile durch Schrauben 82 miteinander lösbar verbunden sind. Der Hohlraum zwischen den Ringen 14 und 16 ist durch Dichtringe 84 und 86 gegen den Außenraum abgedichtet und mit Fett gefüllt.

Durch Abwälzbewegung der Rollen können die Ringe die hin- und hergehenden Ausgleichsdrehbewegungen ausführen, die bei einem Achsversatz auftreten. Durch die Rollen und die im Querschnitt halbkreisförmigen Nuten erfolgt aber auch eine formschlüssige axiale Führung der Ringe aufeinander.

Fig.3 zeigt eine abgewandelte Ausführung in einer Darstellung ähnlich Fig.2. In Fig.3 Rollen 90 bzw. 92A und 92B vorgesehen. Die Rollen sind in im Querschnitt rechteckigen Nuten 94, 96 bzw. 98, 100 angeordnet. Auf dem Grund der Nuten 94, 96 bzw. 98, 100 liegen zylindrische Laufringe 102, 104 bzw. 106, 108 aus hartem Material.

Bei der Ausführung nach Fig.3 sind zwischen dem innersten Ring 16 und dem mittleren Ring 14 zwei axial gegeneinander versetzte Kränze von Rollen 92A und 92B vorgesehen. Die Kränze 92A und 92B sind durch einen Abstandsring 93 voneinander getrennt. Statt zweier Kränze von Rollen 92A und 92B können auch mehr als zwei solche Kränze, jeweils mit Abstandsringen dazwischen vorgesehen sein.

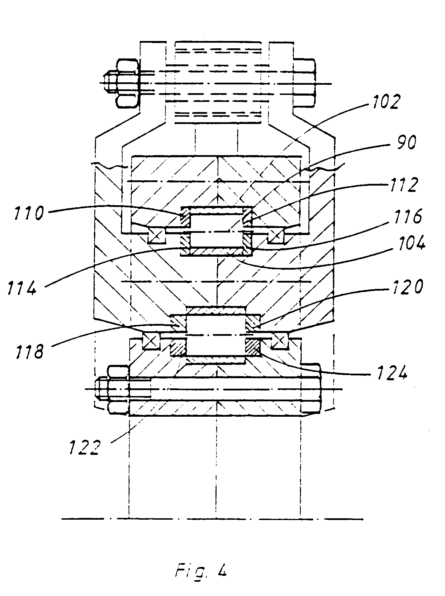

Die Ausführung nach Fig.4 ist wieder ähnlich aufgebaut wie die Ausführung nach Fig.3. Als Wälzkörper dienen auch hier Rollen 90. Bei der Lagerung zwischen dem äußeren Ring 12 und dem mittleren Ring 14 erstrecken sich die Laufringe 102 und 104 nicht über den gesamten Grund der Nuten 94 bzw. 96. Zwischen den Stirnflächen der Laufringe und den Seitenwänden der Nuten 94 und 96 sind Ringscheiben 110, 112 bzw. 114, 116 gehalten. Die Ringscheiben 110 und 112 bestehen ebenfalls aus einem harten Material. An diesen Ringscheiben 110 und 112 kommen die Rollen beim Auftreten axialer Kräfte zur Anlage.

Bei der Lagerung zwischen dem mittleren Ring 14 und dem inneren Ring 16, die hier eine weitere Abwandlung darstellt, überdecken die Laufringe den gesamten Grund der Nuten 94 bzw. 96. Statt der Ringscheiben sind Ringe 118, 120 bzw. 122, 124 vorgesehen, die in ringförmigen Ausnehmungen in den Seitenwänden der Nuten gehalten sind. Die Ringe 118, 120, 122 und 124 haben rechteckigen, vorzugsweise quadratischen Querschnitt und bestehen aus einem Material mit reibungsarmer Oberfläche.

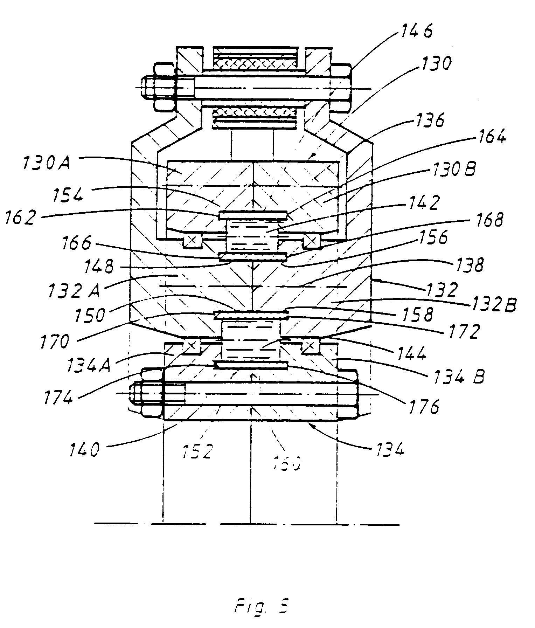

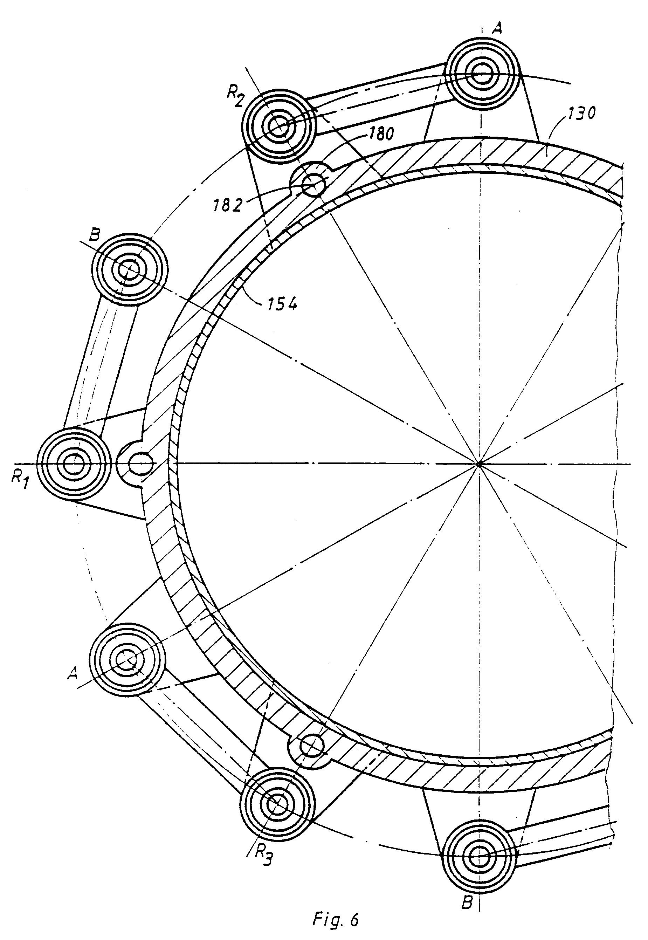

Eine weitere Ausführung ist in Fig.5 und 6 dargestellt.

Wie aus Fig.5 ersichtlich ist, sind drei konzentrische Ringe 130, 132 und 134 vorgesehen. Jeder der Ringe 130, 132 und 134 besteht aus zwei Hälften 130A, 130B; 132A, 132B und 134A, 134B. Die Hälften der Ringe 130, 132 und 134 sind jeweils durch axiale Schrauben 136, 138 bzw. 140 lösbar miteinander verbunden. Der äußere Ring 130 ist über Rollen 142 auf dem mittleren Ring 132 gelagert. Der mittlere Ring 132 ist wiederum über Rollen 144 auf dem inneren Ring 134 gelagert. Wie bei den anderen Ausführungen sitzen die Rollen 142 in Nuten 146 auf der Innenfläche des äußeren Ringes 132 und 148 auf der Außenfläche des mittleren Ringes. In entsprechender Weise sitzen die Rollen 144 in Nuten 150 auf der Innenfläche des mittleren Ringes 132 und der Außenfläche des inneren Ringes 134. Auf dem Grund der Nuten 146, 148; 150, 152 sind Streifen 154, 156 bzw. 158, 160 angeordnet, auf denen die Rollen 142 bzw. 144 laufen. Die Streifen 154 und 156 bestehen aus gehärtetem Federstahl.

Um eine sichere Halterung der federnden Streifen 154 bis 160 auf dem Grund der Nuten, insbesondere der auf den Außenflächen angeordneten Nuten 148 und 152 zu gewährleisten, sind in den Seitenwänden der Nuten, anschließend jeweils an den Grund der Nut axiale Ringnuten 162, 164; 166, 168; 170, 172; 174, 176 angebracht. Die Ringnuten 162 bis 176 nehmen die Ränder der Streifen 154 bis 160 auf. Die Hälften der Ringe 130, 132 und 134 werden von gegenüberliegenden Seiten her auf die kreisförmig gebogenen Streifen 154 bis 160 aufgesetzt und dann mittels der Schrauben 136, 138 und 140 miteinander verschraubt. Dadurch sind die Streifen formschlüssig in den Ringen 130, 132 und 134 gehalten.

Wie aus Fig.6 ersichtlich ist, hat der äußere Ring 130 relativ geringe Dicke in radialer Richtung. Der Ring weist etwa im Bereich der radialen Arme auf der Außenseite halbzylindrische, sich axial erstreckende Vorsprünge 180 auf. In diesen Vorsprüngen und dem daran anschließenden Teil des Ringes 130 sind Bohrungen 182 vorgesehen. Durch diese Bohrungen 182 erstrecken sich die Schrauben 136. Auf diese Weise ergibt sich ein dünner Ring 130 ohne daß die Stabilität der Schraubenführung beeinträchtigt wird. Die übrigen Bauteile der Kupplung sind ähnlich wie in Fig.1 und daher hier nicht im einzelnen beschrieben. Die Vorsprünge 180 sind jeweils um 60° gegeneinader winkelversetzt, wobei zwei dieser Vorsprünge in der gleichen Längsebene liegen wie die an dem äußeren Ring 180 vorgesehenen, diametral gegenüberliegenden, radialen Arme.

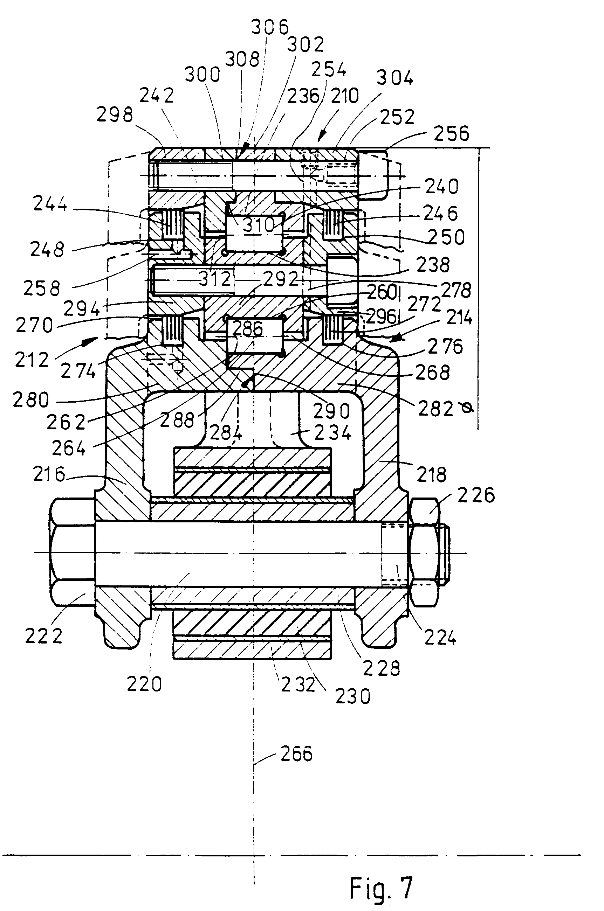

Fig.7 zeigt die obere Hälfte eines Längsschnitts dreier aufeinander gelagerter Ringe 210, 212 und 214, die als Kupplungszwischenglieder einer einen Achsversatz zulassenden Kupplung dienen. An den Ringen 210, 212 und 214 sind radial nach innen ragende Paare von Armen angeformt, von denen in Fig.1 das Paar von Armen 216, 218 des innersten Ringes 214 im Schnitt dargestellt ist. Zwischen den Armen 216 und 218 erstreckt sich ein Bolzen 220. Der Bolzen 220 liegt mit einem Kopf 222 auf der Außenseite des Armes 216 an. An dem anderen Ende weist der Bolzen einen mit Gewinde versehenen Abschnitt 224. Auf diesen Abschnitt 224 ist eine Mutter 226 aufgeschraubt. Auf dem Bolzen 220 sitzt eine Hülse 228, die sich zwischen den Armen 216 und 218 des innersten Ringes 214 erstreckt. Die Hülse 228 ist durch einen Schwingmetallring 230 mit einem Auge 232 eines Lenkers 234 verbunden. Eine ähnliche Anordnung ist auf der diametral gegenüberliegenden Seite des Ringes 214 vorgesehen. Der Lenker 234 ist mit einer (nicht dargestellten) antriebseitigen Kupplungshälfte gelenkig verbunden. Der dazu diametral gegenüberliegende (nicht dargestellte) Lenker ist mit einer (ebenfalls nicht dargestellten) abtriebseitigen Kupplungshälfte verbunden. Entsprechend sind auch die Ringe 210 und 212 über Arme und Lenker einerseits mit der antriebseitigen Kupplungshälfte und andererseits mit der abtriebseitigen Kupplungshälfte verbunden. Die Funktion der Kupplung entspricht der oben erwähnten US-A-4 040 270. Antriebseitige und abtriebseitige Kupplungshälfte sind über Kupplungszwischenglieder in Form von drei aufeinander gelagerten Ringen miteinander verbunden, von denen jedes über einen Lenker einerseits mit der antriebseitigen Kupplungshälfte und andererseits mit der abtriebseitigen Kupplungshälfte verbunden ist. Eine solche Kupplung gestattet eine winkeltreue Übertragung einer Drehbewegung auch bei einem Radialversatz durch eine Kombination einer Schwenkbewegung der Lenker und einer hin- und hergehenden Drehbewegung der Ringe gegeneinander.

Der äußerste Ring 210 weist auf seiner Innenfläche eine Nut 236 auf. Der mittlere Ring 212 weist eine mit der Nut 236 fluchtende Nut 238 auf seiner Außenfläche auf. In den Nuten 236 und 238 sind Wälzkörper 240 in Form von Rollen geführt. Die Wälzkörper 240 laufen auf Laufflächen auf dem Grund der Nuten 236 und 238. Diese Laufflächen sind von den gehärteten Oberflächen der Ringe 210 und 212 selbst gebildet. Die Wälzkörper 240 sind zwischen den Seitenwänden der Nuten 236 und 238 geführt. Dadurch erfolgt auch eine axiale Führung der Ringe 210 und 212 aneinander.

Zwischen den Ringen 210 und 212 ist ein Spalt 242 gebildet. Der Spalt 242 ist beiderseits der Wälzkörper 240 durch Labyrinthdichtungen 244 und 246 abgedichtet. Die Labyrinthdichtungen 244 und 246 bestehen aus federnden Ringen, die in Umfangsnuten 248 bzw. 250 in der Außenfläche des mittleren Ringes 212 gehalten werden und mit ihrem äußeren Umfang an der Innenfläche des äußersten Ringes 210 anliegen. Es wird auf diese Weise ein abgeschlossener Ringraum gebildet. In diesen Ringraum wird ein Schmiermittel wie Fett eingebracht. Das Schmiermittel wird zugeführt über eine Gewindebohrung 252 und einen Kanal 254. Die Gewindebohrung 252 ist durch einen Gewindestopfen 256 verschließbar. An einer Entlüftungsbohrung 258 kann erkannt werden, wenn der Ringraum mit Schmiermittel gefüllt ist.

Der mittlere Ring 212 weist weiterhin eine Nut 260 in seiner Innenfläche auf. Eine damit fluchtende Nut 262 ist in der Außenfläche des innersten Ringes 214 vorgesehen. In den Nuten 260 und 262 sitzen Wälzkörper 264. Die Wälzkörper 264 laufen auf Laufflächen am Grunde der Nuten 260 und 262. Die Laufflächen sind auch hier von den gehärteten Oberflächen der Ringe 212 und 214 gebildet. Die Wälzkörper 264 sind mit ihren Stirnflächen zwischen den Seitenwänden der Nuten 260 und 262 geführt. Dadurch sind die Ringe 212 und 214 axial aneinander geführt. Generell sind die Nuten 236, 238 und 260, 262 gleich breit und alle symmetrisch zu einer Radialmittelebene 266 der Ringe 210, 212 und 214 angeordnet.

Auch zwischen den Ringen 212 und 214 ist ein Spalt 268 gebildet. Der Spalt 268 ist beiderseits der Wälzkörper 264 durch Labyrinthdichtungen 270 und 272 abgedichtet. Die Labyrinthdichtungen 270 und 272 bestehen ebenfalls aus federnden Ringen, die in Umfangsnuten 274 bzw. 276 in der Außenfläche des innersten Ringes 214 gehalten werden und mit ihrem äußeren Umfang an der Innenfläche des mittleren Ringes 212 anliegen. Es wird auf diese Weise ein abgeschlossener Ringraum gebildet. In diesen Ringraum wird das Schmiermittel über einen Kanal 278 eingebracht, der durch den mittleren Ring 212 hindurch verläuft und den Spalt 242 mit dem Spalt 268 verbindet.

Die Ringe 210, 212 und 214 müssen nun so aufgebaut sein, daß sie mit den Wälzkörpern 240, 264 und den Armen 216, 218 usw. montiert werden können. Außerdem muß sichergestellt sein, daß die Laufflächen für die Wälzkörper 240, 264 einwandfrei durchgehend ausgebildet sind. Es ist nicht möglich, etwa verschiedene Teile der Lauffläche an verschiedenen Ringteilen eines geteilten Ringes vorzusehen. So genau können die verschiedenen Ringteile nicht bearbeitet und montiert werden, daß eine absolut stufenlose Lauffläche entstehen würde.

Fig.7 zeigt einen Aufbau, der auf möglichst einfache Weise die Montage der Ringe und Wälzkörper unter Berücksichtigung der geschilderten Bedingungen gestattet.

In Fig.7 besteht der innerste Ring 214 aus einem ersten und einem zweiten Ringteil 280 bzw. 282, die durch eine Trennfuge 284 getrennt sind. Dabei weist die Trennfuge 284 einen äußeren, in einer Radialebene verlaufenden, gegenüber der Radialmittelebene 266 des Ringes 214 zu dem ersten Ringteil 280 hin versetzten, ringförmigen Abschnitt 286 auf, einen daran anschließenden, bis zu der Radialmittelebene 266 sich erstreckenden, zylindrischen Abschnitt 288 und einen in der Radialmittelebene 266 verlaufenden inneren Abschnitt 290. Die Nut 262 ist auf der Außenseite des zweiten Ringteils 282 symmetrisch zu der Radialmittelebene 266 und anschließend an den äußeren, ringförmigen Abschnitt 286 der Trennfuge 284 gebildet. An jedem der beiden Ringteile 280, 282 ist je ein Arm 216, 218 jedes Paares von Armen angeformt.

Der mittlere Ring 212 weist einen Mittelteil 292 auf. Auf der Außen- und Innenfläche des Mittelteils 292 ist je eine der Nuten 238 bzw. 60 gebildet. Die Nut 260 auf der Innenfläche fluchtet mit der Nut 262 des innersten Ringes 214. Der mittlere Ring 212 weist weiterhin je einen zu beiden Seiten daran anschließenden Ringteil 294 und 296 auf, an den je ein Arm jedes Paares der an dem mittleren Ring 212 sitzenden Arme angeformt ist.

Der äußerste Ring 210 weist einen ersten, einen zweiten, einen dritten und einen vierten Ringteil 298, 300, 302 bzw. 304 auf. Dabei ist an dem ersten Ringteil 298 ein Arm jedes Paares der an dem äußersten Ring sitzenden Arme angeformt. Der zweite und der dritte Ringteil 300 bzw. 302 sind durch eine Trennfuge 306 getrennt. Die Trennfuge 306 weist einen ersten, gegenüber der Radialmittelebene 266 zu dem zweiten Ringteil 300 hin versetzten, ringförmigen, äußeren Abschnitt 308 auf, der zu der Radialmittelebene 266 parallel ist. An den ersten Abschnitt 308 schließt sich in Richtung auf den zweiten Ringteil 300 hin ein zylindrischer Abschnitt 310 an. An den zylindrischen Abschnitt 310 schließt sich ein ringförmiger, innerer Abschnitt 312 an, der ebenfalls zu der Radialmittelebene 266 parallel ist. Der dritte Ringteil 302 weist auf seiner Innenseite die Nut 236 auf, die symmetrisch zu der Radialmittelebene 266 liegt und sich bis zu dem inneren Abschnitt 312 der Trennfuge 306 erstreckt. An dem vierten Ringteil 304 ist ein zweiter Arm jedes Paares der an dem äußersten Ring 210 sitzenden Arme angeformt.

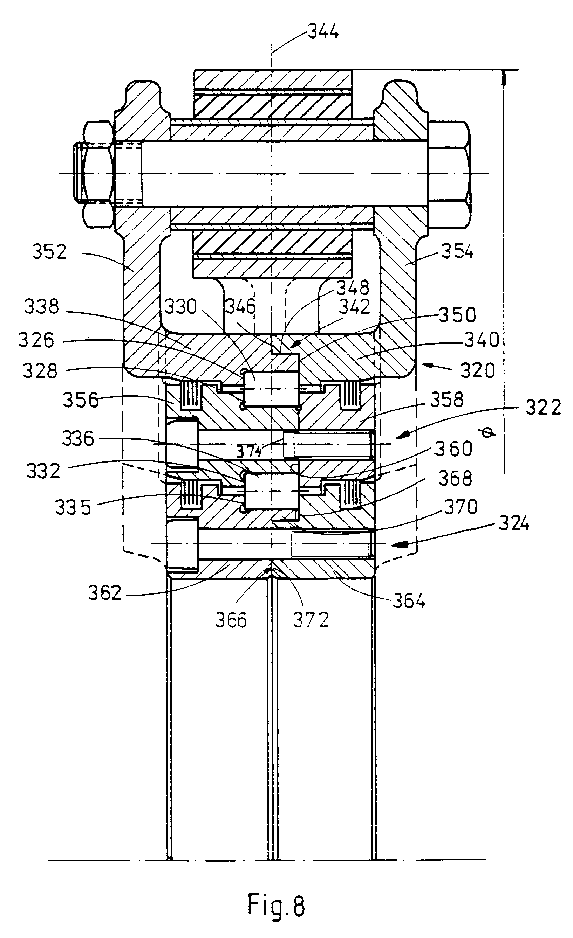

Bei der Ausführung nach Fig.8 erstrecken sich die Arme von den Ringen radial nach außen.

Auch bei der Ausführung nach Fig.8 sind ein äußerster Ring 320, ein mittlerer Ring 322 und ein innerster Ring 324 vorgesehen. Der äußerste Ring 320 weist auf seiner Innenfläche eine Nut 326 auf. Der mittlere Ring 322 weist auf seiner Außenfläche eine Nut 328 auf, die mit der Nut 326 fluchtet. In den Nuten 326 und 328 laufen Wälzkörper 330. Die Wälzkörper 330 laufen auch hier auf Laufflächen, die von der gehärteten Oberfläche der Ringe 320 und 322 selbst gebildet sind. Durch die Seitenwände der Nuten 326 und 328 werden die Wälzkörper 330, die von zylindrischen Rollen gebildet sind, seitlich geführt. Dadurch wird auch der Ring 320 in axialer Richtung auf dem Ring 322 geführt. Der mittlere Ring 322 weist eine Nut 332 auf seiner Innenfläche auf. Der innerste Ring 324 hat eine mit der Nut 332 fluchtende Nut 334 auf seiner Außenfläche. In den Nuten 332 und 334 sind Wälzkörper 336 in Form von zylindrischen Rollen geführt. Auch hier sind die Laufflächen für die Wälzkörper auf dem Grund der Nuten 332 und 334 von der gehärteten Oberfläche der Ringe 322 und 324 selbst gebildet.

Die Schmierung der Lager und die Lagerung der Lenker ist in Fig.8 ähnlich wie in Fig.7 und daher nicht noch einmal im einzelnen beschrieben. Auch die Verbindung mit der antriebseitigen Kupplungshälfte und mit der abtriebseitigen Kupplungshälfte ist ähnlich, wie es in Verbindung mit Fig.7 beschrieben wurde.

Der äußerste Ring 320 besteht aus einem ersten Ringteil 338 und einem zweiten Ringteil 340, die durch eine Trennfuge 342 voneinander getrennt sind. Dabei enthält die Trennfuge einen in einer Radialmittelebene 344 verlaufenden, ersten, äußeren, ringförmigen Abschnitt 346 sowie einen an den ersten Abschnitt 346 anschließenden, zweiten, zylindrischen Abschnitt 348, der sich von der Radialmittelebene 344 in Richtung auf den zweiten Ringteil 340 erstreckt, und einen dritten, inneren ringförmigen Abschnitt 350, der sich an den zweiten Abschnitt 348 anschließt. Der erste Ringteil 338 weist auf seiner Innenfläche die Nut 326 auf, die symmetrisch zu der Radialmittelebene 344 bis zu dem dritten Abschnitt 350 der Trennfuge 342 verläuft. An jedem der Ringteile 338 und 340 ist ein radial nach außen ragender Arm 352 bzw. 354 jedes Paares von an dem ersten Ring 320 sitzenden Armen angeformt.

Der zweite Ring 322 weist einen ersten und einen zweiten Ringteil 356 und 358 auf, die mit ihren Stirnflächen aneinander anliegen und eine im wesentlichen in einer Radialebene verlaufende Trennfuge 360 bilden. Dabei erstreckt sich der erste Ringteil 356 über die Radialmittelebene 344 hinaus bis in die Ebene des inneren Abschnitts 350 der Trennfuge 342 des äußersten Ringes. Die Trennfuge 360 bildet eine Zentrierleiste 374. Der erste Ringteil 356 weist auf seiner Außenfläche und auf seiner Innenfläche je eine der zu der Radialmittelebene 344 symmetrischen Nuten 328 bzw. 332 auf, wobei die auf der Außenfläche gebildete Nut 328 mit der Nut 326 auf der Innenfläche des ersten Ringteils 338 des äußersten Ringes 320 fluchtet. Auch hier ist an jedem der Ringteile 356, 358 ein nach außen ragender Arm jedes Paares von an dem mittleren Ring sitzenden Armen angeformt.

Der innerste Ring 324 weist einen ersten Ringteil 362 und einen zweiten Ringteil 364 auf, die durch eine Trennfuge 366 voneinander getrennt sind. Die Trennfuge 366 weist einen ersten, äußeren, ringförmigen Abschnitt 369 parallel zu der Radialmittelebene 344 auf, der gegenüber der Radialmittelebene 344 in Richtung auf den zweiten Ringteil 364 hin versetzt ist, sowie einen sich an den ersten Abschnitt 368 anschließenden, zylindrischen, zweiten Abschnitt 370, der sich bis zu der Radialmittelebene 344 erstreckt, und einen dritten, inneren, ringförmigen Abschnitt 372, der in der Radialmittelebene 344 verläuft. An jedem Ringteil 362 und 364 ist ein radial nach außen ragender Arm jedes Paares von an dem innersten Ring 324 sitzenden Armen angeformt.

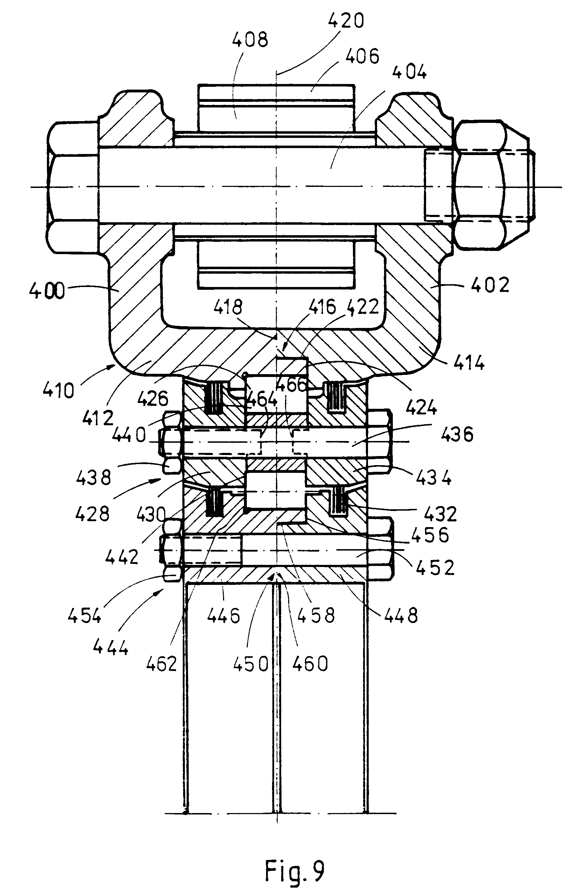

Fig.9 zeigt eine weitere Ausführung der drei als Kupplungszwischenglieder wirkenden Ringe. Auch hier ragen die Arme 400 und 402 radial nach außen und tragen zwischen sich jeweils einen Bolzen 404. Auf dem Bolzen 404 ist ein Lenker 406 über einen Schwingmetallring 408 schwenkbar gelagert.

Bei der Ausführung nach Fig.9 besteht der äußerste Ring 410 aus einem ersten Ringteil 412 und einem zweiten Ringteil 414. Die Ringteile 412 und 414 sind durch eine gestufte Trennfuge 416 voneinander getrennt und durch lösbare Verbindungsmittel (Bolzen) miteinander verbunden. Die Trennfuge 416 weist einen ersten, äußeren, ringförmigen Abschnitt 418 auf, der in einer Radialmittelebene 420 verläuft. An den ersten Abschnitt 418 schließt sich ein mittlerer, zylindrischer Abschnitt 422 an, der sich in Richtung auf den zweiten Ringteil 414 erstreckt. An den zweiten Abschnitt 422 schließt sich ein dritter, zu der Radialmittelebene 420 paralleler, ringförmiger, innerer Abschnitt 424 an. Auf der Innenfläche des ersten Ringteiles 412 ist eine zu der Radialmittelebene 420 symmetrische, sich bis zu dem dritten Abschnitt 424 der Trennfuge 416 erstreckende Nut 426 vorgesehen.

Der mittlere Ring 428 weist einen ersten Ringteil 430, einen zweiten Ringteil 432 und einen dritten Ringteil 434 auf. Der zweite Ringteil 432 ist axial zwischen dem ersten und dem zweiten Ringteil 430 bzw. 434 angeordnet. Dabei sind zwischen den Ringteilen 430 und 432 bzw. 432 und 434 im wesentlichen parallel zu der Radialmittelebene 420 verlaufende Trennfugen gebildet. Die Ringteile 230, 432 und 434 sind durch lösbare Verbindungsmittel in Form von Gewindebolzen 436 und Muttern 438 miteinander verbunden. Der mittlere Ringteil 432 weist einen gegenüber den äußeren Ringteilen 430 und 434 verminderten Durchmesser auf. Der mittlere Ringteil 432 liegt symmetrisch zur Radialmittelebene 420. In seinen axialen Abmessungen entspricht der mittlere Ringteil 432 der Nut 426 auf der Innenfläche des äußersten Ringes 410. Auf diese Weise bilden die drei Ringteile 430, 432 und 434 Nuten 440 und 442 auf der Außen- und der Innenfläche des mittleren Ringes 428 bilden,

Der innerste Ring 444 besteht aus einem ersten Ringteil 446 und einem zweiten Ringteil 448. Die beiden Ringteile 446 und 448 sind durch eine gestufte Trennfuge 450 voneinander getrennt und durch lösbare Verbindungsmittel in Form von Gewindebolzen 452 und Muttern 454 miteinander verbunden. Die Trennfuge 450 weist einen ersten, äußeren, ringförmigen Abschnitt 456 auf. Der Abschnitt 456 verläuft parallel zu der Radialmittelebene 420, ist aber gegen diese in Richtung auf den zweiten Ringteil 448 hin versetzt. Die Trennfuge 450 weist einen zweiten, sich an den ersten Abschnitt 456 anschließenden, mittleren, zylindrischen Abschnitt 458 auf, der sich in Richtung auf den ersten Ringteil 446 erstreckt. Schließlich weist die Trennfuge 450 einen dritten, sich an den zweiten Abschnitt 458 anschließenden, in der Radialmittelebene 420 verlaufenden, ringförmigen, inneren Abschnitt 460 auf. Auf der Außenfläche des ersten Ringteiles 446 ist eine zu der Radialmittelebene 420 symmetrische, sich bis zu dem ersten Abschnitt 456 der Trennfuge 450 erstreckende Nut 462 vorgesehen. Die Nut 462 fluchtet mit der Nut 442 auf der Innenfläche des mittleren Ringes. Auch hier bilden die Trennfugen zwischen den Ringteilen 430, 432 und 434 des mittleren Ringes 428 Zentrierleisten 464 und 466.

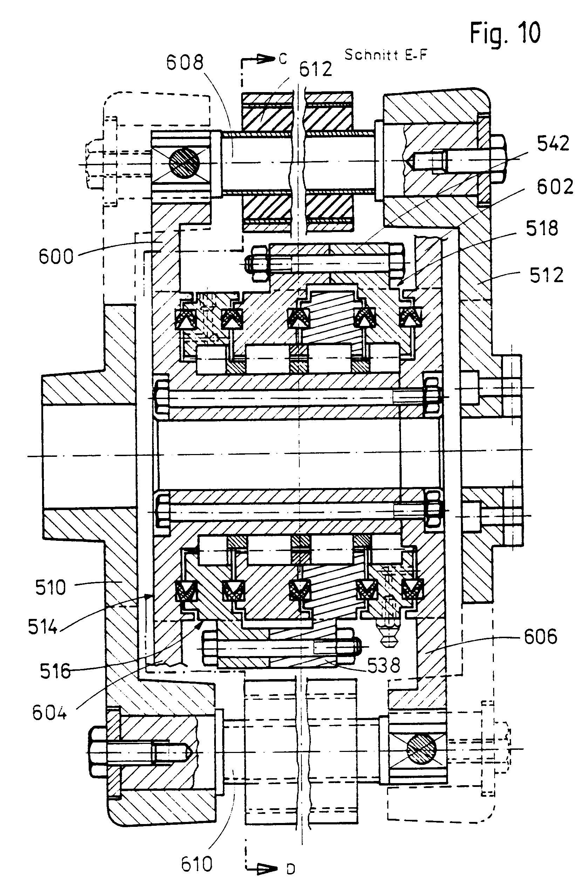

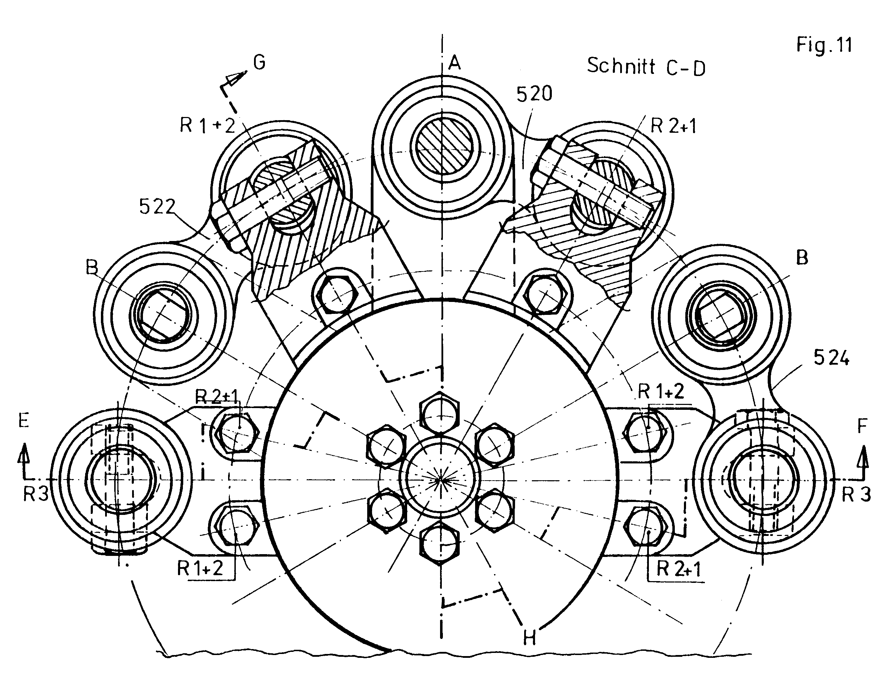

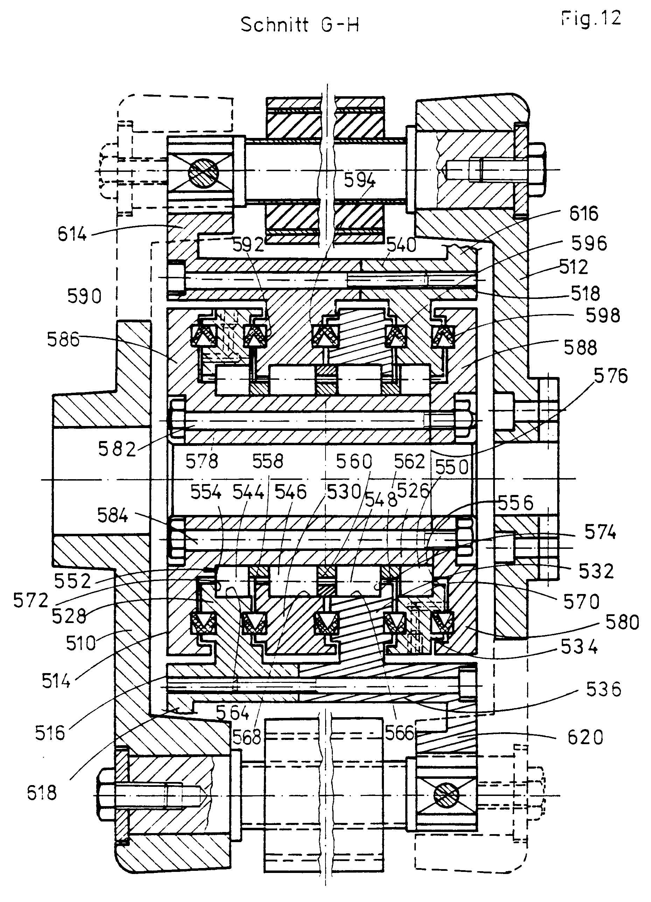

In Fig. 10 und 12 ist mit 510 eine antriebsseitige Kupplungshälfte bezeichnet, welche mit einem antriebsseitigen Teil der zu kuppelnden Teile verbindbar ist. Mit 512 ist eine abtriebsseitige Kupplungshälfte bezeichnet, welche mit dem abtriebsseitigen Teil der zu kuppelnden Teile verbindbar ist. Zwischen der antriebsseitigen Kupplungshälfte 510 und der abtriebsseitigen Kupplungshälfte 512 sind drei Kupplungszwischenglieder 514, 516 und 518 angeordnet. Die Kupplungszwischenglieder sind um eine gemeinsame Achse drehbar aneinander gelagert. Jedes der Kupplungszwischenglieder ist über einen ersten Lenker, z.B. 520 (Fig. 11), mit der antriebsseitigen Kupplungshälfte 512 und über einen dagegen um 180° winkelversetzten zweiten Lenker, z.B. 522, 524 (Fig. 11), mit der abtriebsseitigen Kupplungshälfte 512 verbunden. Diese Funktion der Kupplung ist beispielsweise in der oben genannten US-A-4 040 270 ausführlich beschrieben.

Bei der Ausführung nach Fig. 10 bis 12 sind auf einem ein erstes Kupplungszwischenglied 514 bildenden, ersten, inneren Ring 526 in axialer Folge ein zweiter Ring 528, ein dritter Ring 530, ein vierter Ring 532 und ein fünfter Ring 534 drehbar gelagert. Das zweite Kupplungszwischenglied 516 enthält den zweiten Ring 528 und den vierten Ring 532. Die beiden Ringe 528 und 532 sind unter Überbrückung des dritten Ringes 530 durch Brückenglieder 536 und 538 miteinander verbunden. Das dritte Kupplungszwischenglied 518 enthält den dritten Ring 530 und den fünften Ring 534. Der dritte Ring 530 und der fünfte Ring 534 sind durch Brückenglieder 540 und 542 unter überbrückung des vierten Ringes 532 miteinander verbunden. Zwischen dem das erste Kupplungszwischenglied 514 bildenden ersten Ring 526 und jedem der zweiten, dritten, vierten und fünften Ringe 528, 530, 532 bzw. 534 sind Kränze von Wälzkörpern 544, 546, 548 bzw. 550 vorgesehen. Der erste Ring 526 hat eine breite Nut 552 auf seinem Umfang. In der Nut sind in axialer Folge der erste, der zweite, der dritte und der vierte Kranz 544, 546, 548 und 550 von Wälzkörpern angeordnet. Der erste Kranz 544 und der vierte Kranz 550 von Wälzkörpern sind auf jeweils einer Seite von den Seitenwandungen 554 bzw. 556 der Nut 552 geführt. Zwischen dem ersten Kranz 544 und dem zweiten Kranz 546 ist ein Abstandsring 558 angeordnet. Zwischen dem zweiten Kranz 546 und dem dritten Kranz 548 ist ein Abstandsring 560 angeordnet. Zwischen dem dritten Kranz 548 und dem vierten Kranz 550 ist ein Abstandsring 562 angeordnet. Dabei sind die Wälzkörper der Kränze 544, 546, 548 und 550 durch die Abstandsringe 558, 560 und 562 axial geführt. Die miteinander verbundenen zweiten und vierten Ringe 528, 532, bzw. dritten und fünften Ringe 530, 534, weisen Laufflächen 564, 566 bzw. 568, 570 für die zugehörigen Kränze 544, 548 bzw. 564, 550 von Wälzkörpern auf. Das von dem zweiten Ring 528 und dem vierten Ring 532 gebildete Kupplungszwischenglied bildet weiterhin zwei einander zugewandte radiale Führungsflächen 572 und 574. Dabei ist die Führungsfläche 572 links an dem zweiten Ring 528 und die Führungsfläche 574 rechts an dem vierten Ring 532 vorgesehen. Die Führungsfläche 572 liegt an den Wälzkörpern des zugehörigen Kranzes 544 an. Die Führungsfläche 574 liegt an den Wälzkörpern des zugehörigen Kranzes 548 an.

Die aneinander angrenzenden Stirnflächen des zweiten, dritten, vierten und fünften Ringes 528, 530, 532 bzw. 534 liegen im Bereich der Abstandsringe 558, 560 und 562. Die Lauffläche 564, 566, 568 und 570 jedes der zweiten, dritten, vierten und fünften Ringe 528, 530, 532 bzw. 534 erstreckt sich bis zu einer der Stirnflächen dieses Ringes. Der erste Ring 526 ist längs einer in der Ebene einer Seitenwand 556 der Nut 552 verlaufenden Trennfläche 576 geteilt. Die beiden Ringteile 578 und 580 sind durch lösbare Verbindungsmittel 582 und 584 in Form von Gewindebolzen und Muttern miteinander verbunden. Diese Konstruktion gestattet eine einwandfreie Montage der Kupplung und der Lagerung.

Die Spalte zwischen den Stirnflächen der zweiten, dritten, vierten und fünften Ringe 528, 530, 532 bzw. 534 und zwischen den äusseren Stirnflächen des zweiten Ringes 528 und des fünften Ringes 534 und benachbarten Flanschen 586 bzw. 588 des ersten Ringes 526 sind durch im Querschnitt V-förmige Dichtringe 590, 592, 594, 596 und 598 abgedichtet. Dadurch wird ein abgeschlossener Hohlraum gebildet, der mit einem viskosen Schmiermittel, wie Fett, gefüllt ist.

Die Wälzkörper sind Rollen. Die axialen Abmessungen der Wälzkörper des ersten und des vierten Kranzes 544 bzw. 550 sind geringer als die des zweiten und des dritten Kranzes 546 bzw. 548. Das trägt der Tatsache Rechnung, dass die Wälzkörper der äusseren Kränze 544 und 550 ein Kippmoment auf einem grösseren Hebelarm aufnehmen als die Wälzkörper der inneren Kränze 546 und 548.

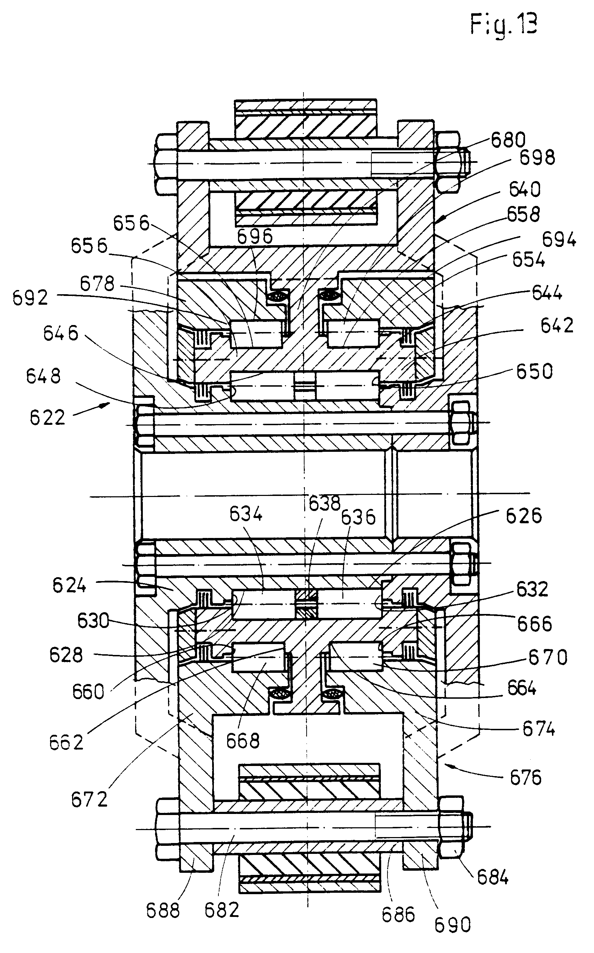

Jedes der Kupplungszwischenglieder 514, 516 und 518 weist ein Paar diametral gegenüberliegender, radialer Arme auf. Jeder dieser Arme besteht aus zwei in axialem Abstand voneinander angeordneten Hälften. An dem ersten Kupplungszwischenglied 514 sind radiale Arme mit den Hälften 600, 602 und 604, 606 vorgesehen. Zwischen den Armen 600 und 602 bzw. 604 und 606 erstrecken sich Lagerzapfen 608 bzw. 610. Wie aus Fig. 11 ersichtlich ist, sind die Lagerzapfen mit Planflächen zwischen den gabelförmigen Enden der Arme 600, 602 gehalten und durch Schrauben festgeklemmt. Auf den Lagerzapfen sitzen Schwingmetallgelenke z.B. 612, mittels derer die Lenker an den Lagerzapfen angelenkt sind. Entsprechende Arme mit Hälften 614, 616 bzw. 618, 620 sind an dem zweiten Kupplungszwischenglied 516 bzw. dem dritten Kupplungszwischenglied 518 vorgesehen, wie am besten aus Fig. 12 ersichtlich ist. Auch an diesen Armen sind die Lenker in der beschriebenen Weise angelenkt.
Eine andere Ausführungsform einer Kupplung zeigt Fig. 13. Die Kupplung nach Fig. 13 zeigt ein erstes Kupplungszwischenglied 622. Das erste Kupplungszwischenglied enthält einen inneren Ring 624. Der innere Ring 624 bildet auf seinem Umfang eine breite Nut 626 mit einer zylindrischen Lauffläche 628 auf deren Grund und radialen Seitenwänden 630 und 632. In der Nut sind zwei Kränze 634 und 636 von rollenförmigen Wälzkörpern gelagert. Zwischen den Kränzen 634 und 636 von Wälzkörpern sitzt ein Abstandsring 638. Die Wälzkörper sind dabei jeweils auf einer Seite von der benachbarten Seitenwand 630 bzw. 632 und auf der anderen Seite von einer Stirnfläche des Abstandsringes 638 axial geführt. Auf dem das erste Kupplungszwischenglied 622 bildenden inneren Ring 624 ist ein ein zweites Kupplungszwischenglied 640 bildender mittlerer Ring 642 gelagert. Der mittlere Ring 642 weist auf seiner Innenfläche eine breite Nut 644 fluchtend mit der Nut 628 des inneren Ringes 624 auf. Die Nut 644 weist eine zylindrische Lauffläche 646 auf ihrem Grund und radiale Seitenwände 648 und 650 auf. Der mittlere Ring 642 ist mit diesen Seitenwänden 680 und und 650 auf den Wälzkörpern der Kränze 634 und 636 und damit axial auf dem inneren Ring 624 geführt. Auf der Aussenseite des mittleren Ringes sind in axialem Abstand voneinander zwei Nuten 652 und 654 mit Laufflächen 656 bzw. 658 und Seitenwänden 660, 662 bzw. 664, 666 vorgesehen. In diesen Nuten 652, 654 sind zwei Kränze von Wälzkörpern 668 bzw. 670 angeordnet und durch die Seitenwände 660, 662 bzw. 664, 666 axial geführt.

Auf dem das zweite Kupplungszwischenglied 640 bildenden mittleren Ring 642 ist ein aus zwei Ringteilen 672 und 674 bestehender, ein drittes Kupplungszwischenglied 676 bildender äusserer Ring 678 gelagert. Radiale Arme 680 des mittleren Ringes 642, an denen die Lenker angelenkt sind, greifen zwischen den beiden Ringteilen 672 und 674 hindurch. Die beiden Ringteile 672 und 674 sind durch ausserhalb des Bereiches der radialen Arme 680 des zweiten Kupplungszwischengliedes 640 vorgesehene axiale Brückenkörper miteinander verbunden. Bei der Ausführung nach Fig. 13 sind die Brückenkörper von Gewindebolzen 682 mit Muttern 684 und Abstandshülsen 686 gebildet, welche die beiden Hälften 688 und 690 der radialen Arme miteinander verbinden. Die beiden Ringteile 672 und 674 weisen einander zugewandte radiale Führungsflächen 692 bzw. 694 auf, die an den axial äusseren Stirnflächen der Wälzkörper der beiden Kränze 668 und 670 anliegen. An die Führungsflächen 692 und 694 schliessen sich zylindrische Laufflächen 696 bzw. 698 für die Wälzkörper an, die sich bis zu den einander zugewandten Stirnflächen der Ringteile 672 und 674 erstrecken.

## Patentansprüche

1. Kupplung zum Kuppeln umlaufender Teile, die einen Versatz der Umlaufachsen zuläßt, enthaltend
(a) eine antriebseitige Kupplungshälfte (10), welche mit dem antriebseitigen der zu kuppelnden Teile verbindbar ist,
(b) eine abtriebseitige Kupplungshälfte, welche mit dem abtriebseitigen der zu kuppelnden Teile verbindbar ist,
(c) drei über Lagerungsmittel konzentrisch aufeinander gelagerte Ringe (12,14,16) als Kupplungszwischenglieder, wobei
(d) jeder der Ringe (12,14,16) über einen ersten Lenker mit der antriebseitigen Kupplungshälfte (10A) und über einen zweiten, gegenüber dem ersten um 180° winkelversetzten Lenker mit der abtriebseitigen Kupplungshälfte (10B) verbunden ist,
**dadurch gekennzeichnet, daß**
(e) die Ringe (12,14,16) in den dem jeweils benachbarten Ring zugewandten Umfangsflächen Ausnehmungen (52,60;74,76) aufweisen, wobei die einander zugewandten Ausnehmungen jeweils miteinander fluchten, und
(f) in den Ausnehmungen (52,60;74,76) als Lagerungsmittel Wälzkörper (70,72) gehalten sind.

2. Kupplung nach Anspruch 1, **dadurch gekennzeichnet, daß**
(a) die Ausnehmungen von Nuten (52,60;74,76) gebildet sind und
(b) die Wälzkörper (70,72) in axialer Richtung in den Nuten (52,60;74,76) geführt sind, wodurch eine axiale Führung der Ringe (12,14,16) aneinander gewährleistet ist.

3. Kupplung nach Anspruch 2, **dadurch gekennzeichnet, daß** zwischen den Ringen (12,14,16) beiderseits der Nuten (52,60;74,76) Dichtringe (66,68;84,86) sitzen, durch welche die Nuten und Wälzkörper gegen den Außenraum abgedichtet sind.

4. Kupplung nach Anspruch 3, **dadurch gekennzeichnet, daß** der Raum innerhalb der Dichtringe (66,68;84,86) mit einem viskosen Schmiermittel (z.B. Fett) gefüllt ist.

5. Kupplung nach einem der Ansprüche 2 bis 4, **dadurch gekennzeichnet, daß** auf dem Grund jeder Nut ein Laufring (54,62;78,80; 154 bis 160)) aus hartem Metall angeordnet ist.

6. Kupplung nach den Anspruch 5, **dadurch gekennzeichnet, daß** die Laufringe von in die Nuten eingelegten Streifen (102,104;106,108; 154 bis 160) gebildet sind.

7. Kupplung nach Anspruch 6, **dadurch gekennzeichnet, daß** in den Seitenwänden der Nuten, anschließend jeweils an den Grund der Nut, axiale Ringnuten (162,164;166,168; 170,172;174,176) angebracht sind, welche die Ränder der Streifen (154 bis 160) aufnehmen.

8. Kupplung nach einem der Ansprüche 6 oder 7, **dadurch gekennzeichnet, daß** die Streifen aus gehärtetem Federstahl bestehen.

9. Kupplung nach einem der Ansprüche 2 bis 8, **dadurch gekennzeichnet,** daß die Nuten (94,96) im Querschnitt rechteckförmig und die Wälzkörper Rollen (90,92) sind.

10. Kupplung nach einem der Ansprüche 2 bis 9, **dadurch gekennzeichnet, daß** die Ringe (12,14,16) längs einer radialen Symmetrieebene (46) geteilt und die Teile durch lösbare Verbindungsmittel miteinander verbunden sind.

11. Kupplung nach Anspruch 10, **dadurch gekennzeichnet, daß** die Rollen in den Nuten in axialer Richtung durch Ringscheiben (110,112;114,116) abgestützt sind die zwischen den Seitenwänden der Nuten und den Stirnflächen der Laufringe (102,104) gehalten sind.

12. Kupplung nach Anspruch 11, **dadurch gekennzeichnet, daß** die Rollen in axialer Richtung durch Führungsringe (118,120; 122,124)abgestützt sind, die in Ringnuten in den Seitenwänden der Nuten gehalten sind.

13. Kupplung nach Anspruch 12, **dadurch gekennzeichnet, daß** die Führungsringe (118,120;122,124) im Querschnitt rechteckig sind.

14. Kupplung nach einem der Ansprüche 2 bis 11, **dadurch gekennzeichnet, daß** zwischen benachbarten Ringen jeweils eine Mehrzahl von axial gegeneinander versetzten Kränzen von Wälzkörpern angeordnet ist.

15. Kupplung nach Anspruch 14, **dadurch gekennzeichnet, daß** zwischen benachbarten Kränzen von Wälzkörpern jeweils ein Abstandsring angeordnet ist.

16. Kupplung nach Anspruch 15, **dadurch gekennzeichnet, daß** der Abstandsring aus einem gleitfähigen Material besteht.

17. Kupplung nach Anspruch 10, **dadurch gekennzeichnet, daß** der äußere Ring (130) etwa im Bereich der radialen Arme auf der Außenseite halbzylindrische, sich axial erstreckende Vorsprünge (180) aufweist, in denen Bohrungen vorgesehen sind, durch welche sich Schrauben zum Verbinden der beiden Teile des Ringes (130) erstrecken.

18. Kupplung nach Anspruch 17, **dadurch gekennzeichnet, daß** der äußere Ring (130) eine gegenüber den inneren Ringen (132,134) verminderte Dicke aufweist.

19. Kupplung nach Anspruch 17 oder 18, **dadurch gekennzeichnet, daß** die Vorsprünge (180) jeweils um 60° gegeneinander winkelversetzt sind.

20. Kupplung nach Anspruch 1,
**dadurch gekennzeichnet, daß**
(a) die auf dem Grund der Nuten (236,238,260,262;326, 328,332,334) gebildeten Laufflächen der Wälzkörper (240,264,330,336) von den Oberflächen der Ringe (210,212,214;320,322,324) selbst gebildet sind und
(b) der innerste und der äußerste Ring (212,214; 320,324) so längs im wesentlichen in Radialebenen verlaufender Trennfugen (284,302;366,342) geteilt sind, daß der Grund der gebildeten Nuten (264,236; 326,334) durch die Trennfugen (284,302;366,342) nicht angeschnitten wird.

21. Kupplung nach Anspruch 20**, dadurch gekennzeichnet, daß** die Trennfugen (284,302;366,342) gestuft sind.

22. Kupplung nach Anspruch 20 oder 21, **dadurch gekennzeichnet, daß**
(a) die Lenker an je einem Paar von in Axialrichtung gesehen fluchtenden radialen Armen (216,218; 352,354) der Ringe angelenkt sind, die an gegenüberliegenden Stirnflächen der Ringe vorgesehen sind und zwischen denen jeweils ein Lenker gelagert ist, und
(b) die axialen Arme wenigstens eines der Ringe an gesonderten Ringteilen (294,296) vorgesehen sind, die mit dazwischenliegenden, die Nuten (238,260) bildenden Ringteilen (292) durch lösbare Verbindungsmittel verbunden sind.

23. Kupplung nach einem der Ansprüche 19 bis 22, **dadurch gekennzeichnet, daß** zwischen den Ringen (210,212,214) beiderseits jeder Nut (236,238,260,262;326,328,332, 334) Labyrinthdichtungen (244,246,270,272) vorgesehen sind, durch welche ein Schmiermittel enthaltender Ringraum mit den Nuten zur Atmosphäre hin abgeschlossen wird, wobei die Labyrinthdichtungen (244,246,270,272) von Ringen gebildet sind, die in einer Ringnut (248,250,274,276) auf der Außenfläche jedes inneren Ringes (212,214;322,324) liegen und an der Innenfläche des nächstäußeren Ringes (210,212; 320,322) anliegen.

24. Kupplung nach einem der Ansprüche 19 bis 23, **dadurch gekennzeichnet, daß** die Arme (216,218) von den jeweiligen Ringen radial nach innen ragen.

25. Kupplung nach Anspruch 24, **dadurch gekennzeichnet, daß**
(a) der innerste Ring (214) aus einem ersten und einem zweiten Ringteil (280,282) besteht, die durch eine Trennfuge (284) getrennt sind, wobei
- die Trennfuge (284) einen äußeren, in einer Radialebene verlaufenden, gegenüber einer Radialmittelebene (266) des Ringes (214) zu dem ersten Ringteil (280) hin versetzten, ringförmigen Abschnitt (286) aufweist sowie
- einen daran anschließenden, bis zu der Radialmittelebene (266) sich erstreckenden, zylindrischen Abschnitt (288) und
- einen in der Radialmittelebene (266) verlaufenden, inneren Abschnitt (290),
- die Nut (262) in der Außenfläche des zweiten Ringteils (282) symmetrisch zu der Radialmittelebene (266) und anschließend an den äußeren, ringförmigen Abschnitt (286) der Trennfuge (284) gebildet ist,
- an jedem der beiden Ringteile (280,282) je ein Arm (216,218) jedes Paares angeformt ist,
(b) der mittlere Ring (212)
- einen Mittelteil (292) aufweist, in dessen Außen- und Innenfläche je eine Nut gebildet ist, wobei die Nut (260) in der Innenfläche mit der Nut (262) des innersten Ringes (214) fluchtet, und
- je einen zu beiden Seiten daran anschließenden Ringteil (294,296), an den je ein Arm jedes Paares von an dem mittleren Ring (212) sitzenden Armen angeformt ist, und
(c) der äußerste Ring (210) einen ersten, einen zweiten, einen dritten und einen vierten Ringteil (298,300,302,304) aufweist, wobei
- an dem ersten Ringteil (298) ein Arm jedes Paares von an dem äußersten Ring sitzenden Armen angeformt ist,
- der zweite und der dritte Ringteil (300,302) durch eine Trennfuge (306) getrennt sind, die
- einen ersten, gegenüber der Radialmittelebene (266) zu dem zweiten Teil (300) hin versetzten, ringförmigen, äußeren Abschnitt (308) aufweist, der zu der Radialmittelebene (266) parallel ist, sowie
- einen sich an den ersten Abschnitt (308) in Richtung auf den zweiten Teil (300) hin anschließenden, zylindrischen Abschnitt (310) und
- einen sich an den zylindrischen Abschnitt (310) anschließenden, ringförmigen inneren Abschnitt (312), der ebenfalls zu der Radialmittelebene (266) parallel ist,
- der dritte Ringteil (302) auf seiner Innenseite eine Nut (236) aufweist, die sich symmetrisch zu der Radialmittelebene (266) erstreckt und bis zu dem inneren Abschnitt (312) der Trennfuge (306) erstreckt, und
- an dem vierten Ringteil (304) ein zweiter Arm jedes Paares von an dem äußersten Ring (210) sitzenden Armen angeformt ist.

26. Kupplung nach einem der Ansprüche 19 bis 23, **dadurch gekennzeichnet, daß**
(a) die Arme (352,354) sich von den Ringen (320,322, 324) radial nach außen erstrecken,
(b) der äußerste Ring (320) aus einem ersten Ringteil (338) und einem zweiten Ringteil (340) besteht, die durch eine Trennfuge (342) voneinander getrennt sind, wobei
- die Trennfuge (342) einen in einer Radialmittelebene (344) verlaufenden, ersten, äußeren, ringförmigen Abschnitt (346) enthält sowie
- einen an den ersten Abschnitt (346) anschließenden, zweiten, zylindrischen Abschnitt (348), der sich von der Radialmittelebene (344) in Richtung auf den zweiten Ringteil (340) erstreckt, und
- einen dritten, inneren ringförmigen Abschnitt (350), der sich an den zweiten Abschnitt (348) anschließt,
- der erste Ringteil (338) auf seiner Innenfläche eine Nut (326) aufweist, die symmetrisch zu der Radialmittelebene (344) bis zu dem dritten Abschnitt (350) der Trennfuge (342) verläuft, und
- an jedem der Ringteile (338,340) ein radial nach außen ragenden Arm jedes Paares von an dem äußersten Ring (320) sitzenden Armen angeformt ist,
(c) der zweite Ring (322) einen ersten und einen zweiten Ringteil (356,358) aufweist, die mit ihren Stirnflächen aneinander anliegen und eine in einer Radialebene verlaufende Trennfuge (360) bilden, wobei
- der erste Ringteil (356) sich über die Radialmittelebene (344) hinaus erstreckt,
- der erste Ringteil (356) auf seiner Außenfläche und auf seiner Innenfläche je eine zu der Radialmittelebene (344) symmetrische Nut (328,332) aufweist, wobei die auf der Außenfläche gebildete Nut (328) mit der Nut (326) auf der Innenfläche des ersten Ringteils (338) des äußersten Ringes (320) fluchtet, und
- an jedem der Ringteile (356,358) ein nach außen ragender Arm jedes Paares von an dem zweiten Ring sitzenden Armen angeformt ist,
(d) der innerste Ring (324) einen ersten Ringteil (362) und einen zweiten Ringteil (364) aufweist, die durch eine Trennfuge (366) voneinander getrennt sind, wobei
- die Trennfuge (366) einen ersten, äußeren, ringförmigen Abschnitt (368) parallel zu der Radialmittelebene (344) aufweist, der gegenüber der Radialmittelebene (344) in Richtung auf den zweiten Ringteil (364) hin versetzt ist, sowie,
- einen sich an den ersten Abschnitt (368) anschließenden, zylindrischen, zweiten Abschnitt (370), der sich bis zu der Radialmittelebene (344) erstreckt, und
- einen dritten, inneren, ringförmigen Abschnitt (372), der in der Radialmittelebene (344) verläuft, und
- an jedem Ringteil (362,364) ein radial nach außen ragender Arm jedes Paares von an dem innersten Ring (324) sitzenden Armen angeformt ist.

27. Kupplung nach Anspruch 26, **dadurch gekennzeichnet, daß** die Trennfuge (360) zwischen dem ersten Ringteil (356) und dem zweiten Ringteil (358) des mittleren Ringes (322) in der Ebene des inneren Abschnitts (350) der Trennfuge (342) des äußersten Ringes (320) liegt.

28. Kupplung nach Anspruch 20, **dadurch gekennzeichnet, daß**
(a) der äußerste Ring (410) aus einem ersten Ringteil (412) und einem zweiten Ringteil (414) besteht, die durch eine gestufte Trennfuge (416) voneinander getrennt und durch lösbare Verbindungsmittel miteinander verbunden sind, wobei
- die Trennfuge (416) einen ersten, äußeren, ringförmigen Abschnitt (418) aufweist, der in einer Radialmittelebene (420) verläuft, sowie
- einen zweiten, sich an den ersten Abschnitt (418) anschließenden, mittleren, zylindrischen Abschnitt (422), der sich in Richtung auf den zweiten Ringteil (414) erstreckt, und
- einen dritten, sich an den zweiten Abschnitt (422) anschließenden, zu der Radialmittelebene (420) parallelen, ringförmigen, inneren Abschnitt (424),
(b) auf der Innenfläche des ersten Ringteiles (412) eine zu der Radialmittelebene (420) symmetrische, sich bis zu dem dritten Abschnitt (424) der Trennfuge (416) erstreckende Nut (426) vorgesehen ist,
(c) der mittlere Ring (428) einen ersten Ringteil (430), einen zweiten Ringteil (432) und einen dritten Ringteil (434) aufweist, von denen der zweite Ringteil (432) axial zwischen dem ersten und dem zweiten Ringteil (430,434) angeordnet ist, wobei
- zwischen den Ringteilen (430,432 bzw. 432,434) im wesentlichen parallel zu der Radialmittelebene (420) verlaufende Trennfugen gebildet sind,
- die Ringteile (430,432,434) durch lösbare Verbindungsmittel (436,438) miteinander verbunden sind und
- der mittlere Ringteil (432) einen gegenüber den äußeren Ringteilen (430,434) verminderten Durchmesser aufweist, symmetrisch zur Radialmittelebene (420) liegt und in seinen axialen Abmessungen der Nut (426) auf der Innenfläche des äußersten Ringes (410) entspricht, so daß die drei Ringteile (430,432,434) Nuten auf der Außen- und der Innenfläche des mittleren Ringes (428) bilden,
(d) der innerste Ring (444) aus einem ersten Ringteil (446) und einem zweiten Ringteil (448) besteht, die durch eine gestufte Trennfuge (450) voneinander getrennt und durch lösbare Verbindungsmittel (452,454) miteinander verbunden sind, wobei
- die Trennfuge (450) einen ersten, äußeren, ringförmigen Abschnitt (456) aufweist, der parallel zu der Radialmittelebene (420) verläuft aber gegen diese in Richtung auf den zweiten Ringteil (448) hin versetzt ist, sowie
- einen zweiten, sich an den ersten Abschnitt (456) anschließenden, mittleren, zylindrischen Abschnitt (458), der sich in Richtung auf den ersten Ringteil (446) erstreckt, und
- einen dritten, sich an den zweiten Abschnitt (458) anschließenden, in der Radialmittelebene (420) verlaufenden, ringförmigen, inneren Abschnitt (460),
(e) auf der Außenfläche des ersten Ringteiles (446) eine zu der Radialmittelebene (420) symmetrische, sich bis zu dem ersten Abschnitt (456) der Trennfuge (450) erstreckende Nut (462) vorgesehen ist.

29. Kupplung nach Anspruch 27, **dadurch gekennzeichnet, daß** die Trennfuge (360) eine Zentrierleiste (374) bildet.

30. Kupplung nach Anspruch 14, **dadurch gekennzeichnet, daß** zwischen jedem Paar benachbarter Ringe wenigstens zwei in axialem Abstand voneinander angeordnete Kränze (544, 548; 546, 550) von Wälzkörpern vorgesehen sind.

31. Kupplung nach Anspruch 30, **dadurch gekennzeichnet, daß** von benachbarten Ringen jeweils wenigstens einer längs einer im wesentlichen radialen Trennfläche (576) in zwei Ringteile (578, 580) durch lösbare Verbindungsmittel (582, 584) verbunden sind.

32. Kupplung nach Anspruch 30 oder 31, **dadurch gekennzeichnet, daß** in einer Nut (526) wenigstens zwei Kränze (544, 546, 548, 550) von Wälzkörper durch Abstandsringe (558, 560, 562) voneinader getrennt und axial geführt sind.

33. Kupplung nach Anspruch 30, **dadurch gekennzeichnet, daß**
(a) auf einem ein erstes Kupplungszwischenglied (514) bildenden ersten, inneren Ring (526) in axialer Folge ein zweiter, ein dritter, ein vierter und ein fünfter Ring (528, 530, 532, 534) drehbar gelagert sind,
(b) das zweite Kupplungszwischenglied den zweiten und den vierten dieser Ringe (528, 532) enthält, die durch Brückenglieder (536, 538) unter Überbrückung des dritten Ringes (530) miteinander verbunden sind,
(c) das dritte Kupplungszwischenglied den dritten und den fünften Ring (530, 534) enthält, die durch Brückenglieder (540, 542) unter Überbrückung des vierten Ringes (532) miteinander verbunden sind, und
(d) Kränze von Wälzkörpern (544, 546, 548, 550) zwischen dem das erste Kupplungsglied (514) bildenden ersten Ring (526) und jedem der zweiten, dritten, vierten und fünften Ringe (528, 530, 532, 534) vorgesehen sind.

34. Kupplung nach Anspruch 33, **dadurch gekennzeichnet, daß**
(a) der erste Ring (526) eine breite Nut (552) auf seinem Umfang aufweist, in welcher in axialer Folge ein erster, ein zweiter, ein dritter und ein vierter Kranz (544, 546, 548, 550) von Wälzkörpern angeordnet ist,
(b) der erste und der vierte Kranz (544, 550) von Wälzkörpern auf jeweils einer Seite von den Seitenwandungen (554, 556) der Nut (552) geführt sind,
(c) zwischen dem ersten und dem zweiten Kranz (544, 546) zwischen dem zweiten und dem dritten Kranz (546, 548) und zwischen dem dritten und dem vierten Kranz (548, 550) je ein Abstandsring (558, 560, 562) angeordnet ist, wobei die Wälzkörper durch die Abstandsring (558, 560, 562) axial geführt sind, und
(d) die miteinander verbundenen zweiten und vierten bzw. dritten und fünften Ringe Laufflächen (564, 566, 568, 570) für die zugehörigen Wälzkörper sowie an die Laufflächen anschliessende, einander zugewandte, radiale Führungsflächen (572, 574) aufweisen, die an den jeweiligen zugehörigen Wälzkörper anliegen.

35. Kupplung nach Anspruch 34, **dadurch gekennzeichnet, daß** die aneinander angrenzenden Stirnflächen der zweiten, dritten, vierten und fünften Ringe (528, 530, 532, 534) im Bereich der Abstandsringe liegen.

36. Kupplung nach Anspruch 34 oder 35, **dadurch gekennzeichnet, daß** sich die Lauffläche (564, 568; 566, 570) jedes der zweiten, dritten, vierten und fünften Ringe (528, 530, 532, 534) bis zu einer der Stirnflächen dieses Ringes erstreckt.

37. Kupplung nach einem der Ansprüche 34 bis 36, **dadurch gekennzeichnet, daß** der erste Ring (526) längs einer in der Ebene einer Seitenwand (556) und der Nut (552) verlaufenden Trennfläche (576) geteilt ist und die Ringeteile (578, 580) durch lösbare Verbindungsmittel (582, 584) miteinander verbunden sind.

38. Kupplung nach einem der Ansprüche 34 bis 37, **dadurch gekennzeichnet, daß** die Spalte zwischen den Stirnflächen der zweiten, dritten, vierten und fünften Ringe (528, 530, 532, 534) und zwischen den äusseren Stirnflächen des zweiten und des fünften Ringes (528, 534) und benachbarten Flanschen (586, 588) des ersten Ringes (526) durch Dichtringe (590, 592, 594, 596, 598) abgedichtet sind, so dass ein abgeschlossener Hohlraum gebildet wird, der mit einem viskosen Schmiermittel gefüllt ist.

39. Kupplung nach einem der Ansprüche 34 bis 38, **dadurch gekennzeichnet, daß**
(a) die Wälzkörper Rollen sind und
(b) die axialen Abmessungen des ersten Wälzkörper und des vierten Kranzes (544, 550) geringer sind als die der Wälzkörper des zweiten und des dritten Kranzes (546, 548).

40. Kupplung nach Anspruch 30, **dadurch gekennzeichnet, daß**
(a) ein erstes Kupplungszwischenglied (622) bildender, innerer Ring (624) auf seinem Umfang eine breite Nut (626) mit einer zylindrischen Lauffläche (628) auf deren Grund und radialen Seitenwänden (630, 632) aufweist,
(b) in der Nut (626) zwei Kränze (634, 636) von Wälzkörpern und dazwischen ein Abstandsring (638) sitzen, wobei die Wälzkörper (634, 636) jeweils auf einer Seite von der beanchbarten Seitenwand (630, 632) der Nut (626) und auf der anderen Seite von einer Stirnfläche des Abstandsringes (638) axial geführt sind,
(c) auf dem das erste Kupplungszwischenglied (622) bildenden inneren Ring (624) ein zweites Kupplungszwischenglied (640) bildender mittlerer Ring (642) gelagert ist, der auf seiner Innenfläche eine breite Nut (644) fluchtend mit der Nut (626) des inneren Ringes (624) aufweist, welche eine zylindrische Lauffläche (646) auf ihrem Grund und radiale Seitenwände (648, 650) aufweist, wobei der mittlere Ring (642) mit diesen Seitenwänden (648, 650) auf den Wälzkörper und damit axial an dem inneren Ring (624) geführt ist.
(d) auf der Aussenseite des mittleren Ringes (642) in axialem Abstand voneinander zwei Nuten (652, 654) mit Laufflächen (656) und Seitenwänden (660, 662; 664, 666) vorgesehen sind, in denen zwei Kränze (668, 670) von Wälzkörpern angeordnet und durch die Seitenwände axial geführt sind,
(e) auf dem das zweite Kupplungszwischenglied (640) bildenden mittleren Ring (642) ein aus zwei Ringteilen (672, 674) bestehender, ein drittes Kupplungszwischenglied (676) bildender äusserer Ring (678) gelagert ist,
(f) radiale Arme (680) des mittleren Ringes (642), an denen die Lenker angelenkt sind, zwischen den beiden Ringteilen (672, 674) hindurchgreifen,
(g) die beiden Ringteile (672, 674) durch ausserhalb des Bereiches der radialen Arme (680) des zweiten Kupplungszwischengliedes (640) vorgesehene, axiale Brückenkörper miteinander verbunden sind,
(h) die beiden Ringteile (672, 674) einander zugewandte, radiale Führungsflächen (692, 694) aufweisen, die an den axial äusseren Stirnflächen der Wälzkörper anliegen und an welche sich zylindrische Laufflächen (696, 698) für die Wälzkörper anschliessen, die sich bis zu den einander zugewandten Stirnflächen der Ringteile (672, 674) erstrecken.

## Claims

1. Coupling for coupling rotating parts which permit offset of the rotational axes, containing
(a) a coupling half (10) disposed on a driving side and connectable to that part of the parts to be coupled which is located on the driving side,
(b) a coupling half disposed on a driven side and connectable to that part of the parts to be coupled which is located on the driven side,
(c) three rings (12,14,16) constituting intermediate coupling members and journalled concentrically at each other via bearing means, whereby
(d) each one of the rings (12,14,16) is connected to the coupling half (10A) on the driving side via a first link and to the coupling half (10B) on the driven side via a second link which is angularly offset from the first link by 180°,
**characterized in that**
(e) the rings comprise respective recesses (52,60;74,76) in the peripheral surfaces which face the respective adjacent ring whereby the mutually facing recesses are aligned with each other, and
(f) respective roller bodies (70,72) are held as bearing means within the recesses (52,60;74,76).

2. Coupling according to claim 1, **characterized in that**
(a) the recesses are formed by grooves (52,60;74,76) and
(b) the rolling bodies (70,72) are guided in the grooves (52,60;74,76) in axial direction whereby axial guidance of the rings (12,14,16) at each other is ensured.

3. Coupling according to claim 2, **characterized in that** respective sealing rings (66,68;84,86) are seated on both sides of the grooves (52,60;74,76) between the rings (12,14,16) by means of which sealing rings the grooves and the rolling bodies are sealed from the exterior space.

4. Coupling according to claim 3, **characterized in that** the space within the sealing rings (66,68;84,86) is filled by a viscous lubricant (for example, grease).

5. Coupling according to any one of claims 2 to 4, **characterized in that** respective bearing races (54,62;78,80;154 to 160) made of hard metal are arranged at the base of the grooves.

6. Coupling according to claim 5, **characterized in that** the bearing races are formed by strips (102,104;106,108;154 to 160) inserted into the grooves.

7. Coupling according to claim 6, **characterized in that** axial annular cut-outs (162,164;166,168;170,172;174,176) are respectively provided in the side walls of the grooves and adjoin the base of the respective grooves, the cut-outs receiving the rims of the strips (154 to 160).

8. Coupling according to one of claims 6 or 7, **characterized in that** the strips are made of hardened spring steel.

9. Coupling according to any one of claims 2 to 8, **characterized in that** the grooves (94,96) have rectangular cross-section and the rolling bodies are rollers (90,92).

10. Coupling according to any one of claims 2 to 9, **characterized in that** the rings (12,14,16) are divided along a radial symmetry plane (46) and the parts are interconnected by detachable connecting means.

11. Coupling according to claim 10, **characterized in that** the rollers are supported in axial direction in the grooves by respective annular discs (110,112;114,116) which are held between the side walls of the respective grooves and the end faces of the respective bearing races (102,104).

12. Coupling according to claim 11, **characterized in that** the rollers are supported in axial direction by means of respective guide rings (118,120;122,124) held in annular cut-outs provided in the side walls of the grooves.

13. Coupling according to claim 12, **characterized in that** the guide rings (118,120;122,124) are rectangular in cross-section.

14. Coupling according to any one of claims 2 to 11, **characterized in that** respective ones of a plurality of rings of rolling bodies are disposed between adjacent rings, said rings being axially offset from each other.

15. Coupling according to claim 14, **characterized in that** respective spacer rings are disposed between adjacent rings of rolling bodies.

16. Coupling according to claim 15, **characterized in that** the spacer ring is made of a slideable material.

17. Coupling according to claim 10, **characterized in that** the outer ring (130) comprises, at its outside somewhere in the region of the radial arms, semi-cylindrical axially extending protrusions (180) provided with respective bores through which screws extend for connecting the two parts of the ring (130).

18. Coupling according to claim 17, **characterized in that** the outer ring (130) has a thickness which is reduced in comparison to the inner rings (132,134).

19. Coupling according to claim 17 or 18, **characterized in that** the protusions (180) are angularly offset from each other by 60°.

20. Coupling according to claim 1,
**characterized in that**
(a) the bearing faces for the respective rolling bodies (240,264,330,336), which bearing faces are formed at the base of the respective grooves (236,238,260,262; 326,328,332,334), are formed by the surface of the respective rings (210,212,214; 320,322,324) themselves and
(b) the innermost and the outermost rings (212,214;320, 324) are divided along respective parting joints (284,302;366,342) essentially along radial planes such that the base of the respectively formed grooves (264,236;326,334) is not cut into by the parting joints (284, 302;366,342).

21. Coupling according to claim 20, **characterized in that** the parting joints (284,302;366,342) are stepped.

22. Coupling according to claim 20 or 21, **characterized in that**
(a) the links are linked to respective pairs of radial arms (216,218;352,354) of the rings, which arms are aligned with each other as viewed in axial direction, which are provided at opposite end faces of the rings and between which a respective link is supported, and
(b) the axial arms of at least one of the rings are provided at separate ring parts (294,296) which are connected to interposed ring parts (292) which form the grooves (238,260), by detachable connecting means.

23. Coupling according to any one of claims 19 to 22, **characterized in that** respective labyrinth seals (244,246, 270,272) are provided between the rings (210,212,214) on both sides of each groove (236,238,260,262;326,328,332, 334), a lubricant containing annular space with the grooves being sealed off from the atmosphere by the labyrinth seals, whereby the labyrinth seals are formed by rings which lie in respective annular grooves (248,250, 274,276) at the outer face of each inner ring (212,214; 322,324) and engage the inner face of the next outer ring (210,212;320,322).

24. Coupling according to any one of claims 19 to 23, **characterized in that** the arms (216,218) radially inwardly protrude from the respective rings.

25. Coupling according to claim 24, **characterized in that**
(a) the innermost ring (214) consists of a first and a second ring part (280,282) which are separated by a parting joint (284), whereby
- the parting joint (284) comprises an outer annular section (286) which extends in a radial plane and which is offset from a radial center plane (266) of the ring (214) towards the first ring part (280), as well as
- a cylindrical section (288) adjoined thereto and extending up to the radial center plane (266) and
- an inner section (290) extending in the radial center plane (266),
- the groove (262) is formed in the outer face of the second ring part (282) symmetric to the radial center plane (266) and formed to adjoin the outer annular section (286) of the parting joint (284),
- one arm (216,218) of each pair is formed integrally with a respective one of the two ring parts (280,282),
(b) the median ring (212)
- comprises a central portion (292) having an outer and an inner face in which a respective groove is formed, the groove (260) in the inner face being aligned with the groove (262) of the innermost ring (214), and
- respective ring parts (294,296) adjoined thereto on both sides, each having integrally formed therewith a respective one of the arms of each pair of arms seated at the median ring (212), and
(c) the outermost ring (210) comprises a first, a second, a third and a fourth ring part (298,300,302,304), whereby
- one arm of each pair of arms seated at the outermost ring is formed integrally with the first ring part (298),
- the second and the third ring parts (300,302) are separated by a parting joint (306) which
- comprises an annular outer first section (308) which is offset from the radial center plane (266) towards the second portion (300) and which is parallel to the radial center plane (266), as well as
- a cylindrical section (310) following the first section (308) in a direction towards the second part (300) and
- an annular inner section (312) following the cylindrical section (310) and also being parallel to the radial center plane (266),
- the third ring part (302) comprises on its inner side a groove (236) which extends symmetrically to the radial center plane (266) and up to the inner section (312) of the parting joint (306), and
- a second arm of each pair of arms seated at the outermost ring (210) is integrally formed with the fourth ring part (304).

26. Coupling according to any one of claims 19 to 23, **characterized in that**
(a) the arms (352,354) extend radially outwardly from the respective rings (320,322,324),
(b) the outermost ring (320) consists of a first ring part (338) and a second ring part (340) which are separated from each other by a parting joint (342), whereby
- the parting joint (342) includes an outer annular first section (346) extending in a radial center plane (344), as well as
- a cylindrical second section (348) following the first section (346) and extending from the radial center plane (344) in a direction towards the second ring part (340), and
- an inner annular third section (350) following the second section (348),
- the first ring portion (338) comprises at its inner face a groove (326) which extends symmetric to the radial center plane (344) up to the third section (350) of the parting joint (342), and
- a radially outwardly protruding arm of each pair of arms seated at the outermost ring (320) is integrally formed with a respective one of the ring parts (338,340),
(c) the second ring (322) comprises a first and a second ring part (356,358) which engage each other with their end faces and form a parting joint (360) extending in a radial plane, whereby
- the first ring part (356) extends beyond the radial center plane (344),
- the first ring part (356) comprises at its outer face and at its inner face respective grooves (328, 332) which are symmetric to the radial center plane (344), whereby the groove (328) formed at the outer face is aligned with the groove (326) formed at the inner face of the first ring part (338) of the outermost ring (320), and
- an outwardly protruding arm of each pair of arms seated at the second ring is integrally formed with a respective one of the ring parts (356,358),
(d) the inermost ring (324) comprises a first ring part (362) and a second ring part (364) which are separated from each other by a parting joint (366), whereby
- the parting joint (366) comprises an outer annular first section (368) which is parallel to the radial center plane (344) and which is offset from the radial center plane (344) in a direction towards the second ring part (364), as well as
- a cylindrical second section (370) which follows the first section (368) and extends up to the radial center plane (344), and
- an inner annular third section (372) extending in the radial center plane (344), and
- a radially outwardly protruding arm of each pair of arms seated at the innermost ring (324) is integrally formed with the respective ring parts (362,364).

27. Coupling according to claim 26, **characterized in that** the parting joint (360) between the first ring part (356) and the second ring part (358) of the median ring (322) is disposed in the plane of the inner section (350) of the parting joint (342) of the outermost ring (320).

28. Coupling according to claim 20, **characterized in that**
(a) the outermost ring (410) consists of a first ring part (412) and a second ring part (414) which are separated from each other by a stepped parting joint (416) and interconnected by detachable connecting means, whereby
- the parting joint (416) comprises an outer annular first section (418) extending in a radial center plane (420), as well as
- a median cylindrical section (422) following the first section (418) and extending in a direction towards the second ring part (414), and
- an annular inner third section (424) following the second section (422) and being parallel to the radial center plane (424),
(b) a groove (426) is provided at the inner face of the first ring part (412) and extends symmetric to the radial center plane (420) up to the third section (424) of the parting joint (416),
(c) the median ring (428) comprises a first ring part (430), a second ring part (432) and a third ring part (434), the second ring part (432) thereof being arranged axially between the first and the second ring parts (430,434), whereby
- parting joints are formed between respective ring parts (430,432 and 432,434) and extend essentially parallel to the radial center plane (420),
- the ring parts (430,432,434) are interconnected by detachable connecting means (436,438) and
- the median ring part (432) has a diameter which is reduced in comparison to the outer ring parts (430, 434), the median ring portion lying symmetric to the radial center plane (420) and corresponding in its axial dimensions to the groove (426) formed at the inner face of the outermost ring (410) so that the three ring parts (430,432,434) form respective grooves at the outer and inner faces of the median ring (428),
(d) the innermost ring (444) consists of a first ring part (446) and a second ring part (448) which are separated from each other by a stepped parting joint (450) and interconnected by detachable connecting means (452,454), whereby
- the parting joint (450) comprises an outer annular first section (456) which extends parallel to the radial center plane (420) but which is offset therefrom in a direction towards the second ring part (448), as well as
- a median cylindrical second section (458) following the first section (456) and extending in a direction towards the first ring part (446), and
- an annular inner third section (460) following the second section (458) and extending in the radial center plane (420),
(e) a groove (462) is provided at the outer face of the first ring part (446), the groove being symmetric to the radial center plane (420) and extending up to the first section (456) of the parting joint (450).

29. Coupling according to claim 27, **characterized in that** the parting joint (360) forms a centering ledge (374).

30. Coupling according to claim 14, **characterized in that** at least two rings (544,548;546,550) of rolling bodies are provided between each pair of adjacent rings and arranged at an axial spacing from each other.

31. Coupling according to claim 30, **characterized in that** at least one of adjacent rings is divided along an essentially radial parting surface (576) into two ring parts (578,580) connected by detachable connecting means (582,584).

32. Coupling according to claim 30 or 31, **characterized in that** at least two rings (544,546,548,550) of rolling bodies in one groove (526) are separated from each other by respective spacer rings (558, 560,562) and axially guided.

33. Coupling according to claim 30, **characterized in that**
(a) a second, third, fourth and fifth ring (528,530,532, 534) are rotatably journalled in axial sequence at an inner first ring (526) forming a first intermediate coupling member (514),
(b) the second intermediate coupling member includes the second and fourth one of these rings (528,532) which are interconnected by bridging members (536,538) bridging the third ring (530),
(c) the third intermediate coupling member includes the third and the fifth ring (530,534) which are interconnected by bridging members (540,542) bridging the fourth ring (532), and
(d) rings of rolling bodies (544,546,548,550) are respectively provided between the first ring (526) forming the first coupling member (514) and each one of the second, third, fourth and fifth rings (528, 530,532,534).

34. Coupling according to claim 33, **characterized in that**
(a) the first ring (526) comprises a broad groove (552) at its circumference, a first, a second, a third and a fourth ring (544,546,548,550) of rolling bodies being arranged in axial sequence in the groove,
(b) the first and the fourth ring (544,550) of rolling bodies are guided on each side by respective side walls (554,556) of the groove (552),
(c) respective spacer rings (558,560,562) are arranged between the first and second ring (544,546), between the second and third ring (546,548) and between the third and fourth ring (548,550), the rolling bodies being axially guided by the spacer rings (558,560, 562), and
(d) the interconnected second and fourth as well as third and fifth rings comprise respective bearing faces (564,566,568,570) for the associated rolling bodies as well as respective radial guide surfaces (572,574) which adjoin the bearing faces, which face each other and which engage the associated rolling bodies.

35. Coupling according to claim 34, **characterized in that** the mutually adjoining end faces of the second, third, fourth and fifth rings (528,530,532,534) lie in the region of the respective spacer rings.

36. Coupling according to claim 34 or 35, **characterized in that** the bearing face (564,568;566,570) of each one of the second, third, fourth and fifth rings (528,530,532,534) extend up to one of the end faces of the respective ring.

37. Coupling according to any one of claims 34 to 36, **characterized in that** the first ring (526) is divided along a parting surface extending in the plane of a side wall (556) and the groove (552) and the ring parts (578, 580) are interconnected by detachable connecting means (582,584).

38. Coupling according to any one of claims 34 to 37, **characterized in that** the gaps respectively defined between the end faces of the second, third, fourth and fifth rings (528,530,532, 534) and between the outer end faces of the second and fifth rings (528,534) and adjacent flanges (586,588) of the first ring (526) are sealed by means of respective sealing rings (590,592,594,596,598) such that there is formed an enclosed hollow space which is filled by a viscous lubricant.

39. Coupling according to any one of claims 34 to 38, **characterized in that**
(a) the rolling bodies are rollers and
(b) the axial dimensions of the first rolling bodies and the fourth ring (544,550) are smaller than those of the rolling bodies of the second and third ring (546, 548).

40. Coupling according to claim 30, **characterized in that**
(a) an inner ring (624) which forms a first intermediate coupling member (622), comprises at its circumference a broad groove (626) including a cylindrical bearing face (628) at its base and radial side walls (630, 632),
(b) two rings (634,636) of rolling bodies and a spacer ring (638) therebetween are seated in the groove (626), the rolling bodies (634,636) being axially guided on one side thereof by the respective adjacent side wall (630,632) of the groove (626) and on the other side by an end face of the spacer ring (638),
(c) a median ring (642) forming a second intermediate coupling member (640) is journalled at the inner ring (624) forming the first intermediate coupling member (622), the median ring comprising at its inner face a broad groove (644) which is aligned with the groove (626) of the inner ring (624) and which comprises a cylindrical bearing face (646) at its base and radial side walls (648,650), the median ring being guided by means of these side walls (648,650) at the rolling bodies and thus being axially guided at the inner ring (624).
(d) two grooves (652,654) having respective bearing faces (656) and respective side walls (660,662;664,666) are provided at an axial spacing on the outer side of the median ring (642), two rings (668,670) of rolling bodies being arranged in the respective grooves and axially guided by the side walls thereof,
(e) an outer ring (678) forming a third intermediate coupling member (676) and consisting of two ring parts (672,674) is journalled at the median ring (642) forming the second intermediate coupling member (640),
(f) radial arms (680) of the median ring (642), to which arms links are articulated, pass through between the two ring parts (672,674),
(g) the two ring parts (672,674) are interconnected by axial bridging bodies which are provided outside the region of the radial arms (680) of the second intermediate coupling member (640),
(h) the two ring parts (672,674) comprise respective radial guide surfaces (692,694) which face each other, which engage the axial outer end faces of the rolling bodies and which are adjoined by the cylindrical bearing faces (696,698) for the rolling bodies which extend up to the mutually facing end faces of the ring parts (672,674).

## Revendications

1. Dispositif d'accouplement destiné à accoupler des éléments rotatifs et permettant un décentrage des axes de rotation, comprenant
(a) un demi-accouplement du côté d'entraînement (10) susceptible d'être relié à l'élément à accoupler du côté d'entraînement,
(b) un demi-accouplement du côté de dérive susceptible d'être relié à l'élément à accoupler du côté de dérive,
(c) trois anneaux (12,14,16) comme éléments intermédiaires d'accouplement montés concentriquement l'un sur l'autre par des moyens de logement, dans lequel
(d) chacun des anneaux (12,14,16) est relié par une première bielle au demi-accouplement du côté d'entraînement (10A), et par une seconde bielle angulairement décalée de 180° par rapport à la première bielle, au demi-accouplement du côté de dérive (10B),
**caractérisé par le fait que**
(e) les anneaux (12,14,16) présentent des creux (52,60;74,76) dans les surfaces circonférentielles en face de l'anneau respectivement adjacent, les creux respectivement en face étant alignés l'un sur l'autre, et
(f) des moyens de roulement (70,72) sont tenus dans les creux (52,60;74,76) comme moyens de logement.

2. Accouplement selon la revendication 1, **caractérisé par le fait que**
(a) les creux sont formés par des rainures (52,60;74,76), et
(b) les corps de roulement (70,72) sont guidés, en direction axiale, dans les rainures (52,60;74,76), assurant ainsi un guidage axial des anneaux (12,14,16) l'un contre l'autre.

3. Accouplement selon la revendication 2, **caractérisé par le fait que** des anneaux d'étanchement (66,68;84,86) sont disposés entre les anneaux sur les deux côtés des rainures (52,60;74,76), anneaux d'étanchement par lesquels les rainures et le corps de roulement sont étanchés contre l'espace extérieur.

4. Accouplement selon la revendication 3, **caractérisé par le fait que** l'espace à l'intérieur des anneaux d'étanchement (66,68;84,86) est rempli d'un lubrifiant visqueux (par exemple de la graisse).

5. Accouplement selon l'une des revendications 2 à 4, **caractérisé par le fait qu'**un anneau de roulement (54,62;78,80; 154 à 160) en métal dur est disposé sur le fond de chaque rainure.

6. Accouplement selon la revendication 5, **caractérisé par le fait que** les anneaux de roulement sont formés par des bandes (102,104;106,108; 154 à 160) insérées dans les rainures.

7. Accouplement selon la revendication 6, **caractérisé par le fait que** des rainures annulaires axiales (162,164;166,168;170,172;174,176) sont montées dans les parois latérales des rainures à côté de chaque fond de la rainure, rainures annulaires qui récoivent les bords des bandes (154 à 160).

8. Accouplement selon l'une des revendications 6 ou 7, **caractérisé par le fait que** les bandes sont faites d'acier trempé à ressorts.

9. Accouplement selon l'une des revendications 2 à 8, **caractérisé par le fait que** les rainures (94,96) sont rectangulaires en coupe transversale et les corps de roulement sont des poulies (90,92).

10. Accouplement selon l'une des revendications 2 à 9, **caractérisé par le fait que** les anneaux (12,14,16) sont divisés le long d'un plan de symétrie radial (46) et les parties sont reliées par des moyens de connexion détachables.

11. Accouplement selon la revendication 10, **caractérisé par le fait que** les poulies sont supportées dans les rainures dans la direction axiale par des disques annulaires (110,112;114,116) tenus entre les parois latérales des rainures et les fronts des anneaux de roulement (102,104).

12. Accouplement selon la revendication 11, **caractérisé par le fait que** les poulies sont supportées, dans la direction axiale, par des anneaux de guidage (118,120;122,124) tenus dans des rainures annulaires dans les parois latérales des rainures.

13. Accouplement selon la revendication 12, **caractérisé par le fait que** les anneaux de guidage 8118,120;122,124) sont rectangulaires en coupe transversale.

14. Accouplement selon l'une des revendications 2 à 11, **caractérisé par le fait qu'**une multitude de couronnes de corps de roulement axialement décalées l'une contre l'autre est disposée chaque fois entre des anneaux adjacents.

15. Accouplement selon la revendication 14, **caractérisé par le fait qu'**une bague d'écartement est disposée chaque fois entre les couronnes adjacentes des corps de roulement.

16. Accouplement selon la revendication 15, **caractérisé par le fait que** la bague d'écartement est faite d'une matière glissable.

17. Accouplement selon la revendication 10, **caractérisé par le fait que** l'anneaux extérieur (130) présente, approximativement dans le domaine des bras radiaux, des saillies axiales (180) demi-cylindriques sur le côté extérieur, saillies dans lesquelles on a prévu des alésages par lesquels s'étendent des vis destinées à relier les deux parties de l'anneau (130).

18. Accouplement selon la revendication 17, caractérisé par le fait que l'anneau extérieur (130) présente une épaisseur réduite par rapport aux anneaux intérieurs (132,134).

19. Accouplement selon la revendication 17 ou 18, **caractérisé par le fait que** les saillies (180) sont décalées l'une de l'autre de 60°.

20. Accouplement selon la revendication 1,
**caractérisé par le fait que**
(a) les surfaces de roulement des corps de roulement (240,264,330,336) formées sur le fond des rainures (236,238,260,262; 326,328,332,334) sont formées par les surfaces des anneaux (210,212,214; 320,322,324) elles-mêmes, et
(b) les anneaux intérieurs et extérieurs (212,214;320,324) sont divisés le long des fentes de séparation (284,302;366,342) s'étendant en général dans le plan radial de sorte que le fond des rainures formées (264,236;326,334) n'est pas coupé par les fentes de séparation (284,302;366,342).

21. Accouplement selon la revendication 20, **caractérisé par le fait que** les fentes de séparation (284,302;366,342) sont étagées.

22. Accouplement selon la revendication 20 ou 21, **caractérisé par le fait que**
(a) les bielles sont chaucune articulées à une paire de bras radiaux (216,218;352,354) des anneaux, bras qui sont alignés vu en direction axiale et prévus sur des fronts opposés des anneaux, une bielle à la fois étant montée entre ces bras, et
(b) les bras axiaux d'au moins l'une des anneaux sont prévus sur des parties d'anneau séparées (294,296) reliées à des parties d'anneau (292) interposées formant les rainures (283,260), par des moyens de connexion détachables.

23. Accouplement selon l'une des revendications 19 à 22, **caractérisé par le fait qu'**on a prévu des bagues à labyrinthes (244,246,270,272) entre les anneaux (210,212,214) sur les deux côtés de chaque rainure (236,238,260,262;326,328,332), bagues à labyrinthe qui ferment un espace annulaire rempli d'un lubrifiant avec les rainures vers l'atomosphère, les bagues à labyrinthe (244,246,270,272) étant formées par des anneaux disposés dans une rainure annulaire (248,250,274,276) sur la surface extérieure de chaque anneau intérieur (212,214;322,324) et appliqués contre la surface intérieure de l'anneau extérieur suivant (210,212;320,322).

24. Accouplement selon l'une des revendications 19 à 23, **caractérisé par le fait que** les bras (216,218) s'étendent depuis les anneaux respectifs radialement vers l'intérieur.

25. Accouplement selon la revendication 24, **caractérisé par le fait que**
(a) l'anneau intérieur (214) est constitué d'une première et d'une seconde partie d'anneau (280,282) séparées par une fente de séparation (284), dans lequel
- la fente de séparation (284) présente une section annulaire (286) extérieure s'étendant dans un plan radial et décalée par rapport à un plan médian radial (266) de l'anneau (214) vers la première partie d'anneau (280), ainsi que
- une section cylindrique (288) à côté de celle-ci, s'étendant jusqu'au plan médian radial (266), et
- une section intérieure (290) s'étendant dans la plan médian radial (266),
- la rainure (262) est formée dans la surface extérieure de la seconde partie d'anneau (282) symétriquement au plan médian radial (266) et à côté de la section annulaire (286) extérieure de la fente de séparation (284),
- un bras (216,218) de chaque paire à la fois est monté sur chacune des deux parties d'anneau (280,282),
(b) l'anneau moyen (212)
- présente une partie centrale (292), dans la surface extérieure et intérieure de la partie centrale étant formée une rainure à la fois, la rainure (260) dans la surface intérieure étant alignée sur la rainure (262) de l'anneau intérieure (214), et
- une partie d'anneau (294,296) à la fois sur les deux côtés de celle-ci, partie d'anneau sur laquelle est monté un bras à la fois de chaque paire de bras disposés sur l'anneau moyen (212), et
(c) l'anneau extérieur (212) présente une première, une seconde, une troisième et une quatrième partie d'anneau (298,300,302,304), dans lequel
- un bras de chaque paire de bras disposés sur l'anneau extérieur est monté sur la première partie d'anneau (298),
- la seconde et la troisième partie d'anneau (300,302) sont séparées par une fente de séparation (306), qui
- présente une section extérieure (308) annulaire décalée par rapport au plan médian radial (26) vers la seconde partie (300) et parallèle au plan médian radial (266), ainsi que
- une section cylindrique (310) à côté de la première section (308) dans la direction de la seconde partie (300), et
- une section intérieure (312) annulaire à côté de la section cylindrique (310) et également parallèle au plan médian radial (266),
- la troisième partie d'anneau (302) présente, sur son côté intérieur, une rainure (236) s'étendant symétriquement au plan médian radial (266) et jusqu'à la section intérieure (312) de la fente de séparation (306), et
- un second bras de chaque paire de bras disposés sur l'anneau extérieur (210), est monté sur la quatrième partie d'anneau (304).

26. Accouplement selon l'une des revendications 19 à 23, **caractérisé par le fait que**
(a) les bras (352,354) s'étendent depuis les anneaux (320,322,324) radialement vers l'extérieur,
(b) l'anneau extérieur (320) est constitué d'une première et d'une second partie d'anneau (338, 340) séparées par une fente de séparation (342), dans lequel
- la fente de séparation (342) présente une section annulaire (346) extérieure s'étendant dans un plan radial et décalée par rapport à un plan médian radial (344), ainsi que
- une seconde section cylindrique (348) à côté de la première section (346) et s'étendant depuis le plan médian radial (344) dans la direction de la seconde partie d'anneau (340), et
- une troisième section intérieure annulaire (350) à côté de la seconde section (348),
- la première partie annulaire (338) présente, sur sa surface intérieure, une rainure (326) s'étendant symétriquement au plan médian radial (344) jusqu'à la troisième section (350) de la fente de séparation (342), et
- un bras s'étendant radialement vers l'extérieur de chaque paire de bras disposés sur l'anneau extérieur (320), est monté sur chacune des parties d'anneau (338,340),
(c) le second anneau (322) présente une première et une seconde partie d'anneau (356,358) en contact avec leurs fronts et formant une fente de séparation (360) s'étendant dans un plan médian radial,
- la première partie d'anneau (356) s'étend par le plan médian radial (344),
- la première partie d'anneau (356) présente, sur sa surface extérieure et sur sa surface intérieure, une rainure (328,332) à la fois, qui est symétrique au plan médian radial (344), la rainure (328) formée sur la surface extérieure étant alignée sur la rainure (326) sur la surface intérieure de la première partie d'anneau (338) de l'anneau extérieur (320), et
- un bras s'étendant vers l'extérieur de chaque paire de bras disposés sur le second anneau, est monté sur chacune des parties d'anneau (356,358),
(d) l'anneau intérieur (324) présente une première et une seconde partie d'anneau (362, 364) séparées par une fente de séparation (366), dans lequel
- la fente de séparation (366) présente une première section annulaire (368) extérieure parallèle au plan médian radial (344) et décalée par rapport au plan médian radial (344) dans la direction de la seconde partie d'anneau (364), ainsi que
- une seconde section cylindrique (370) à côté de la première section (368) et s'étendant jusqu'au plan médian radial (344), et
- une troisième section intérieure annulaire (372) s'étendant dans le plan médian radial (344), et
- un bras s'étendant radialement vers l'extérieur de chaque paire de bras disposés sur l'anneau intérieur (324), est monté sur chaque partie d'anneau (362,364).

27. Accouplement selon la revendication 26, **caractérisé par le fait que** la fente de séparation (360) est disposée entre la première partie d'anneau (356) et la seconde partie d'anneau (358) de l'anneau moyen (322) dans le plan de la section intérieure (350) de la fente de séparation (342) de l'anneau extérieur (320).

28. Accouplement selon la revendication 20, **caractérisé par le fait que**
(a) l'anneau extérieur (410) est constitué d'une première et d'une seconde partie d'anneau (412,414) séparées par une fente de séparation (416) étagée et reliées par des moyens de connexion détachables, dans lequel
- la fente de séparation (416) présente une première section extérieure annulaire (418) s'étandant dans un plan médian radial (420), ainsi que
- une seconde section cylindrique moyenne (422) à côté de la première section (418) et s'étendant dans la direction de la seconde partie d'anneau (414), et
- une troisième section annulaire intérieure (424) à côté de la seconde section (422) et parallèle au plan médian radial (420),
(b) on a prévu une rainure (426) s'étendant jusqu'à la troisième section (424) de la fente de séparation (416) et symétrique au plan médian radial (420) sur la surface intérieure de la première partie d'anneau (412),
(c) l'anneau moyen (428) présente une première partie d'anneau (430), une seconde partie d'anneau (432) et une troisième partie d'anneau (434) dont la seconde partie d'anneau (432) est disposée axialement entre la première et la seconde partie d'anneau (430,434), dans lequel
- des fentes de séparation s'étendant en général parallèlement au plan médian radial (420), sont prévues entre les parties d'anneau (430,432 et 432, 434),
- les parties d'anneau (430,432,434) sont reliées par des moyens de connexion déchables (436,438), et
- la partie d'anneau moyenne (432) a un diamètre réduit par rapport aux parties d'anneau extérieures, elle est symétrique au plan médian radial (420) et correspond, dans ses dimensions axiales, à la rainure (426) sur la surface intérieure de l'anneau extérieur (410) de sorte que les trois parties d'anneau (430,432,434) forment des rainures sur la surface intérieure et extérieure de l'anneau moyen (428),
(d) l'anneau intérieur (444) est constitué d'une première partie d'anneau (446) et une seconde partie d'anneau (448) séparées par une fente de séparation étagée (450) et reliées par des moyens de connexion détachables (452,454), dans lequel
- la fente de séparation (450) présente une première section extérieure annulaire (456) parallèle au plan médian radial (420) mais radialement décalée par rapport à celui-ci dans la direction de la seconde partie d'anneau (448), ainsi que
- une seconde section cylindrique moyenne (458) à côté de la première section (456) et s'étendant dans la direction de la première partie d'anneau (446), et
- une troisième section annulaire intérieure (460) à côté de la seconde section (458) et s'étendant dans le plan médian radial (420),
(b) on a prévu une rainure (462) s'étendant jusqu'à la première section (456) de la fente de séparation (450) et symétrique au plan médian radial (420) sur la surface extérieure de la première partie d'anneau (446).

29. Accouplement selon la revendication 27, **caractérisé par le fait que** la fente de séparation (360) forme un listel de centrage (374).

30. Accouplement selon la revendication 14, **caractérisé par le fait qu'**on a prévu au moins deux couronnes (544,548;546,550) de corps de roulement, qui sont disposées avec un écart axial l'une de l'autre entre chaque paire d'anneaux adjacents.

31. Accouplement selon la revendication 30, **caractérisé par le fait que**, parmi deux anneaux adjacents, au moins l'un à la fois est relié le long d'une fente de séparation (576) en général radiale dans deux parties d'anneau (578,580) par des moyens de connexion détachables (582,584).

32. Accouplement selon la revendication 30 ou 31, **caractérisé par le fait que**, dans une rainure (526), au moins deux couronnes (544,546,548,550) de corps de roulement sont séparées et axialement guidées par des bagues d'écartement (558,560,562).

33. Accouplement selon la revendication 30, **caractérisé par le fait que**
(a) un second, un troisième, un quatrième et un cinquième anneau (528,530,532,534) sont montés rotativement en séquence axiale sur un premier anneau (526) intérieur formant un premier élément intermédiaire d'accouplement (514),
(b) le second élément intermédiaire d'accouplement comprend le second et le quatrième de ces anneaux (528,532) reliés par des éléments de pont (536,538) en jetant un pont sur le troisième anneau (530),
(c) le troisième élément intermédiaire d'accouplement comprend le troisième et le cinquième anneau (530,534) reliés par des éléments de pont (540,542) en jetant un pont sur le quatrième anneau (532), et
(d) des couronnes de corps de roulement (544,546,548,550) sont prévus entre le premier anneau (526) formant le premier élément d'accouplement (514) et chacun des seconds, troisièmes, quatrièmes et cinquièmes anneaux (528,530,532,534).

34. Accouplement selon la revendication 33, **caractérisé par le fait que**
(a) le premier anneau (526) présente, sur sa circonférence, une large rainure (552) dans laquelle sont disposées, en séquence axiale, une première, une seconde, une troisième et une quatrième couronne (544,546,548,550) de corps de roulement,
(b) la première et la quatrième couronne (544,550) de corps de roulement sont guidées sur un côté chacune des parois latérales (554,556) de la rainure (552),
(c) une bague d'écartement (558,560,562) à la fois est disposée entre la première et la seconde couronne (544,546), entre la seconde et la troisième couronne (546,548) et entre la troisième et la quatrième couronne (548,550), les corps de roulement étant guidés axialement par les bagues d'écartement (558,560,562), et
(d) les seconds et quatrièmes, et les troisièmes et cinquièmes anneaux présentent des surfaces de roulement (564,566,568,570) pour les corps de roulement associés ainsi que des surfaces de guidage (572,574) radiales l'une en face de l'autre à côté des surfaces de roulement, et en contact avec le corps de roulement associés.

35. Accouplement selon la revendication 34, **caractérisé par le fait que** les fronts adjacents des seconds, troisièmes, quatrièmes et cinquièmes anneaux (528,530,532,534) sont disposés dans le domaine des bagues d'écartement.

36. Accouplement selon la revendication 34 ou 35, **caractérisé par le fait que** les surfaces de roulement (564,568;566,570) de chacun des seconds, troisièmes, quatrièmes et cinquièmes anneaux (528,530,532,534) s'étendent jusqu'à l'un des fronts de ces anneaux.

37. Accouplement selon l'une des revendications 34 à 36, **caractérisé par le fait que** le premier anneau (526) est divisé le long d'une surface de séparation (576) s'étandant dans la plan d'une paroi latérale (556) et la rainure (552), et les parties d'anneau (578,580) sont reliées par des moyens de connexion détachables (582,584).

38. Accouplement selon l'une des revendications 34 à 37, **caractérisé par le fait que** la fente entre les fronts des seconds, troisièmes, quatrièmes et cinquièmes anneaux (528,530,532,534) et entre les fronts extérieurs des seconds et cinquièmes anneaux (528,534) et des flasques adjacentes (586,588) du premier anneau (526) sont étanchées par des bagues d'étanchement (590,592,594,596,598) de sorte que se forme une cavité fermée remplie d'un lubrifiant visqueux.

39. Accouplement selon l'une des revendications 34 à 38, **caractérisé par le fait que**
(a) les corps de roulements sont des poulies, et
(b) les dimensions axiales du premier corps de roulement et de la quatrième couronne (544, 550) sont plus petites que celles des corps de roulement de la seconde et de la troisième couronne (546,548).

40. Accouplement selon la revendication 30, **caractérisé par le fait que**
(a) un anneau intérieur (624) formant le premier élément intermédiaire d'accouplement (622) présente, sur sa circonférence, une large rainure (626) munie d'une surface de roulement cylindrique (628) sur son fond et des parois latérales (630,632),
(b) deux couronnes (634,636) de corps de roulement et une bague d'écartement (638) entre celles-ci sont disposées dans la rainure (626), les corps de roulement (634,636) étant axialement guidés chacun sur un côté de la paroi latérale adjacente (630,632) de la rainure (626) et sur l'autre côté d'un front de la bague d'écartement (638),
(c) un anneau moyen (642) formant le second élément intermédiaire d'accouplement (640) est monté sur l'anneau intérieur (624) formant le premier élément intermédiaire d'accouplement (622), et présente, sur sa surface intérieure, une large rainure (644) alignée sur la rainure (626) de l'anneau intérieur (624), rainure qui présente une surface de roulement cylindrique (646) sur son fond et des parois latérales radiales (648, 650), l'anneau moyen (642) étant guidé avec ces parois latérales (648,650) sur le corps de roulement et avec cela axialement sur l'anneau intérieur (624),
(d) deux rainures (652,654) sont munies de surfaces de roulement (656) et des parois latérales (660,662;664,666) sur le côté extérieur de l'anneau moyen (642) avec un écartement axial l'une de l'autre, rainures dans lesquelles deux couronnes (668,670) de corps de roulement sont disposées et guidées axialement par les parois latérales,
(e) un anneau extérieur (678) formant un troisième élément intermédiaire d'accouplement (676) et constitué de deux parties d'anneau (672,674), est monté sur l'anneau moyen (642) formant le second élément intermédiaire d'accouplement (640),
(f) des bras radiaux (680) de l'anneau moyen (642) auxquels sont articulées les bielles, s'étendent par les deux parties d'anneau (672,674),
(g) les deux parties d'anneau (672,674) sont reliées par des corps de pont axiaux prévus à l'extérieur du domaine des bras radiaux (680) du second élément intermédiaire d'accouplement (640),
(h) les deux parties d'anneau (672,674) présentent des surfaces de guidage (692,694) radiales l'une en face de l'autre et en contact avec les fronts axialement extérieur des corps de roulement, et qui sont à côté de surfaces de roulement cylindriques (696,698) pour le corps de roulement s'étendant jusqu'aux fronts des parties d'anneau, dont l'un est en face de l'autre.
